# EUROPEAN PATENT APPLICATION

(11) **EP 3 982 273 A1**
(43) Date of publication of application: **13.04.2022**
(21) Application number: 21211326.0
(22) Date of filing: 30.07.2018
(51) Int. Cl.: G06F 15/78, G06F 9/54, G06F 9/50

(54) **TECHNOLOGIES FOR PRE-CONFIGURING ACCELERATORS BY PREDICTING BIT-STREAMS**

(30) Priority: 30.08.2017 IN 201741030632; 10.11.2017 US 201762584401 P; 30.12.2017 US 201715859370
(62) Divisional of application: 18186431.5
(71) Applicant: INTEL Corporation, Santa Clara, CA 95054 (US)
(72) Inventor: BERNAT, Francesc Guim, 08036 Barcelona (ES); BALLE, Susanne M., Hudson, 03051 (US); PUTYRSKI, Slawomir, 81-572 Gdynia (PL); KHANNA, Rahul, Portland, 97229 (US); DORMITZER, Paul, Acton, 01720 (US)
(74) Representative: Rummler, Felix

(57) **Abstract**

Technologies for pre-configuring accelerators by predicting bit-streams include communication circuitry and a compute device. The compute device includes a compute engine to determine one or more bit-streams registered on each accelerator of multiple accelerators. The compute engine is further to predict a next job to be requested for acceleration from an application of at least one compute sled of multiple compute sleds, predict a bit-stream from a bit-stream library that is to execute the predicted next job requested to be accelerated, and determine whether the predicted bit-stream is already registered on one of the accelerators. In response to a determination that the predicted bit-stream is not registered on one of the accelerators, the compute engine is to select an accelerator from the plurality of accelerators that satisfies characteristics of the predicted bit-stream and register the predicted bit-stream on the determined accelerator.

## Description

### BACKGROUND

Demand for accelerator devices has continued to increase as accelerator devices provide significantly more processing capacity over general purpose processors for various technological areas, such as machine learning and genomics. Typical architectures for accelerator devices, such as field programmable gate arrays (FPGAs), cryptography accelerators, graphics accelerators, and/or compression accelerators (referred to herein as "accelerator devices," "accelerators," or "accelerator resources") capable of accelerating the execution of a set of operations in a workload (e.g., processes, applications, services, etc.) may allow static assignment of specified amounts of shared resources of the accelerator device (e.g., high bandwidth memory, data storage, etc.) among different portions of the logic (e.g., circuitry) of the accelerator device to perform corresponding operations in one or more workloads. When an accelerator device receives a job requested to be accelerated from a compute device, the accelerator device may fetch a bit-stream that can execute the requested job and may register the bit-stream on the accelerator device. However, the fetching and registering of the bit-stream may consume a non-trivial amount of time, thereby delaying the acceleration of the job and reducing the performance benefits associated with using the accelerator device.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified diagram of at least one embodiment of a data center for executing workloads with disaggregated resources;
FIG. 2 is a simplified diagram of at least one embodiment of a pod of the data center of FIG. 1;
FIG. 3 is a perspective view of at least one embodiment of a rack that may be included in the pod of FIG. 2;
FIG. 4 is a side plan elevation view of the rack of FIG. 3;
FIG. 5 is a perspective view of the rack of FIG. 3 having a sled mounted therein;
FIG. 6 is a is a simplified block diagram of at least one embodiment of a top side of the sled of FIG. 5;
FIG. 7 is a simplified block diagram of at least one embodiment of a bottom side of the sled of FIG. 6;
FIG. 8 is a simplified block diagram of at least one embodiment of a compute sled usable in the data center of FIG. 1;
FIG. 9 is a top perspective view of at least one embodiment of the compute sled of FIG. 8;
FIG. 10 is a simplified block diagram of at least one embodiment of an accelerator sled usable in the data center of FIG. 1;
FIG. 11 is a top perspective view of at least one embodiment of the accelerator sled of FIG. 10;
FIG. 12 is a simplified block diagram of at least one embodiment of a storage sled usable in the data center of FIG. 1;
FIG. 13 is a top perspective view of at least one embodiment of the storage sled of FIG. 12;
FIG. 14 is a simplified block diagram of at least one embodiment of a memory sled usable in the data center of FIG. 1; and
FIG. 15 is a simplified block diagram of a system that may be established within the data center of FIG. 1 to execute workloads with managed nodes composed of disaggregated resources;
FIG. 16 is a simplified block diagram of at least one embodiment of a system for predicting a bit-stream to pre-configure an accelerator;
FIG. 17 is a simplified block diagram of an orchestrator server of FIG. 16;
FIG. 18 is a simplified block diagram of at least one embodiment of an environment that may be established by the orchestrator server of FIGS. 16 and 17; and
FIGS. 19-21 are a simplified flow diagram of at least one embodiment of a method for predicting a bit-stream and pre-registering the predicted bit-stream on an accelerator that may be performed by the orchestrator server of FIGS. 16-18.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

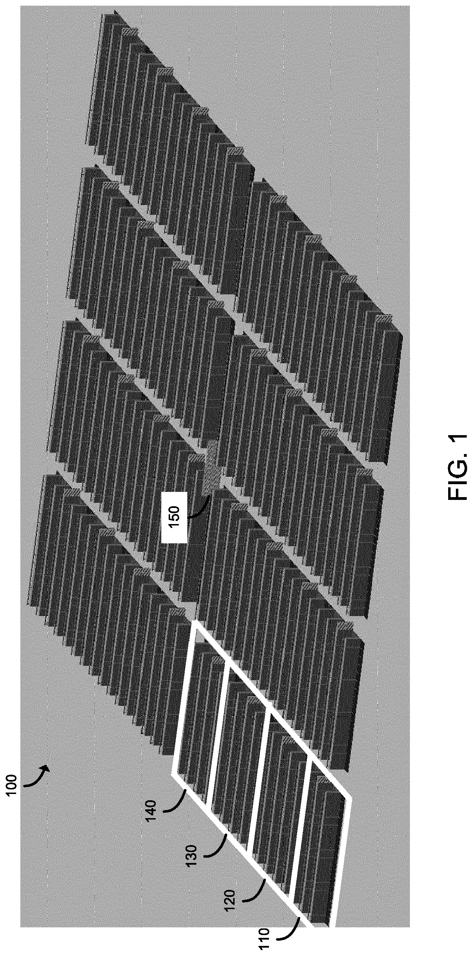

Referring now to FIG. 1, a data center 100 in which disaggregated resources may cooperatively execute one or more workloads (e.g., applications on behalf of customers) includes multiple pods 110, 120, 130, 140, each of which includes one or more rows of racks. As described in more detail herein, each rack houses multiple sleds, which each may be embodied as a compute device, such as a server, that is primarily equipped with a particular type of resource (e.g., memory devices, data storage devices, accelerator devices, general purpose processors). In the illustrative embodiment, the sleds in each pod 110, 120, 130, 140 are connected to multiple pod switches (e.g., switches that route data communications to and from sleds within the pod). The pod switches, in turn, connect with spine switches 150 that switch communications among pods (e.g., the pods 110, 120, 130, 140) in the data center 100. In some embodiments, the sleds may be connected with a fabric using Intel Omni-Path technology. As described in more detail herein, resources within sleds in the data center 100 may be allocated to a group (referred to herein as a "managed node") containing resources from one or more other sleds to be collectively utilized in the execution of a workload. The workload can execute as if the resources belonging to the managed node were located on the same sled. The resources in a managed node may even belong to sleds belonging to different racks, and even to different pods 110, 120, 130, 140. Some resources of a single sled may be allocated to one managed node while other resources of the same sled are allocated to a different managed node (e.g., one processor assigned to one managed node and another processor of the same sled assigned to a different managed node). By disaggregating resources to sleds comprised predominantly of a single type of resource (e.g., compute sleds comprising primarily compute resources, memory sleds containing primarily memory resources), and selectively allocating and deallocating the disaggregated resources to form a managed node assigned to execute a workload, the data center 100 provides more efficient resource usage over typical data centers comprised of hyperconverged servers containing compute, memory, storage and perhaps additional resources). As such, the data center 100 may provide greater performance (e.g., throughput, operations per second, latency, etc.) than a typical data center that has the same number of resources.

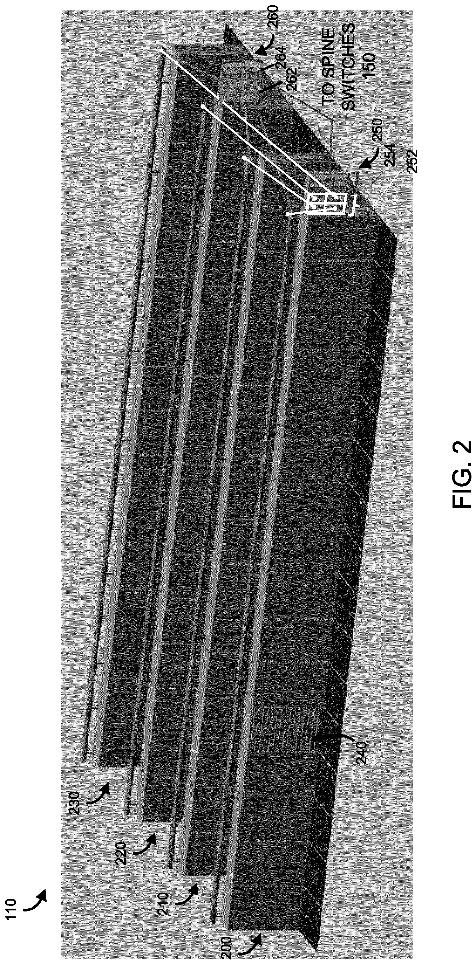

Referring now to FIG. 2, the pod 110, in the illustrative embodiment, includes a set of rows 200, 210, 220, 230 of racks 240. Each rack 240 may house multiple sleds (e.g., sixteen sleds) and provide power and data connections to the housed sleds, as described in more detail herein. In the illustrative embodiment, the racks in each row 200, 210, 220, 230 are connected to multiple pod switches 250, 260. The pod switch 250 includes a set of ports 252 to which the sleds of the racks of the pod 110 are connected and another set of ports 254 that connect the pod 110 to the spine switches 150 to provide connectivity to other pods in the data center 100. Similarly, the pod switch 260 includes a set of ports 262 to which the sleds of the racks of the pod 110 are connected and a set of ports 264 that connect the pod 110 to the spine switches 150. As such, the use of the pair of switches 250, 260 provides an amount of redundancy to the pod 110. For example, if either of the switches 250, 260 fails, the sleds in the pod 110 may still maintain data communication with the remainder of the data center 100 (e.g., sleds of other pods) through the other switch 250, 260. Furthermore, in the illustrative embodiment, the switches 150, 250, 260 may be embodied as dual-mode optical switches, capable of routing both Ethernet protocol communications carrying Internet Protocol (IP) packets and communications according to a second, high-performance link-layer protocol (e.g., Intel's Omni-Path Architecture's, Infiniband) via optical signaling media of an optical fabric.

It should be appreciated that each of the other pods 120, 130, 140 (as well as any additional pods of the data center 100) may be similarly structured as, and have components similar to, the pod 110 shown in and described in regard to FIG. 2 (e.g., each pod may have rows of racks housing multiple sleds as described above). Additionally, while two pod switches 250, 260 are shown, it should be understood that in other embodiments, each pod 110, 120, 130, 140 may be connected to different number of pod switches (e.g., providing even more failover capacity).

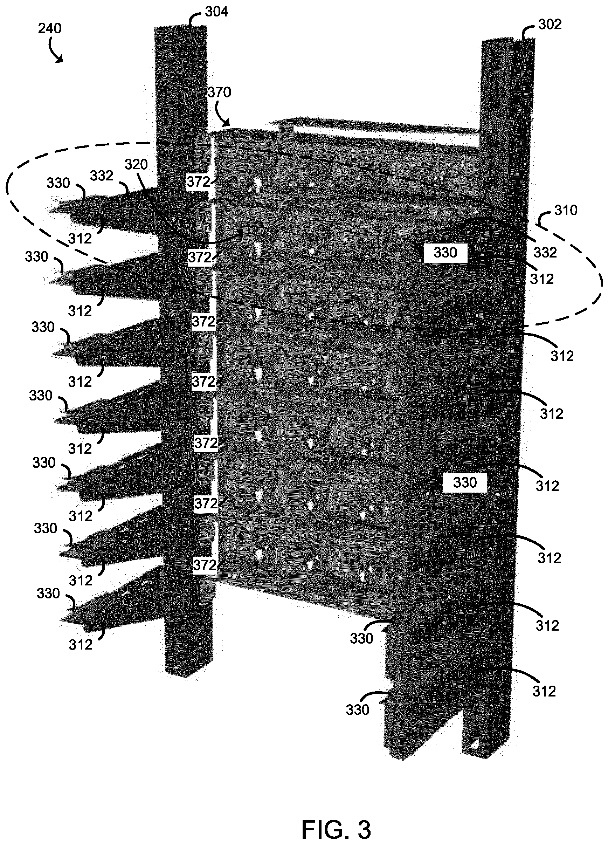

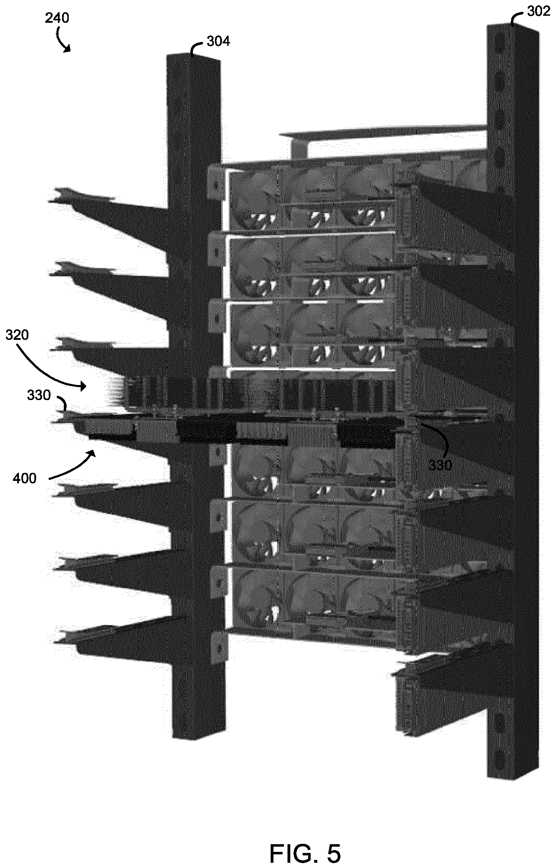

Referring now to FIGS. 3-5, each illustrative rack 240 of the data center 100 includes two elongated support posts 302, 304, which are arranged vertically. For example, the elongated support posts 302, 304 may extend upwardly from a floor of the data center 100 when deployed. The rack 240 also includes one or more horizontal pairs 310 of elongated support arms 312 (identified in FIG. 3 via a dashed ellipse) configured to support a sled of the data center 100 as discussed below. One elongated support arm 312 of the pair of elongated support arms 312 extends outwardly from the elongated support post 302 and the other elongated support arm 312 extends outwardly from the elongated support post 304.

In the illustrative embodiments, each sled of the data center 100 is embodied as a chassis-less sled. That is, each sled has a chassis-less circuit board substrate on which physical resources (e.g., processors, memory, accelerators, storage, etc.) are mounted as discussed in more detail below. As such, the rack 240 is configured to receive the chassis-less sleds. For example, each pair 310 of elongated support arms 312 defines a sled slot 320 of the rack 240, which is configured to receive a corresponding chassis-less sled. To do so, each illustrative elongated support arm 312 includes a circuit board guide 330 configured to receive the chassis-less circuit board substrate of the sled. Each circuit board guide 330 is secured to, or otherwise mounted to, a top side 332 of the corresponding elongated support arm 312. For example, in the illustrative embodiment, each circuit board guide 330 is mounted at a distal end of the corresponding elongated support arm 312 relative to the corresponding elongated support post 302, 304. For clarity of the Figures, not every circuit board guide 330 may be referenced in each Figure.

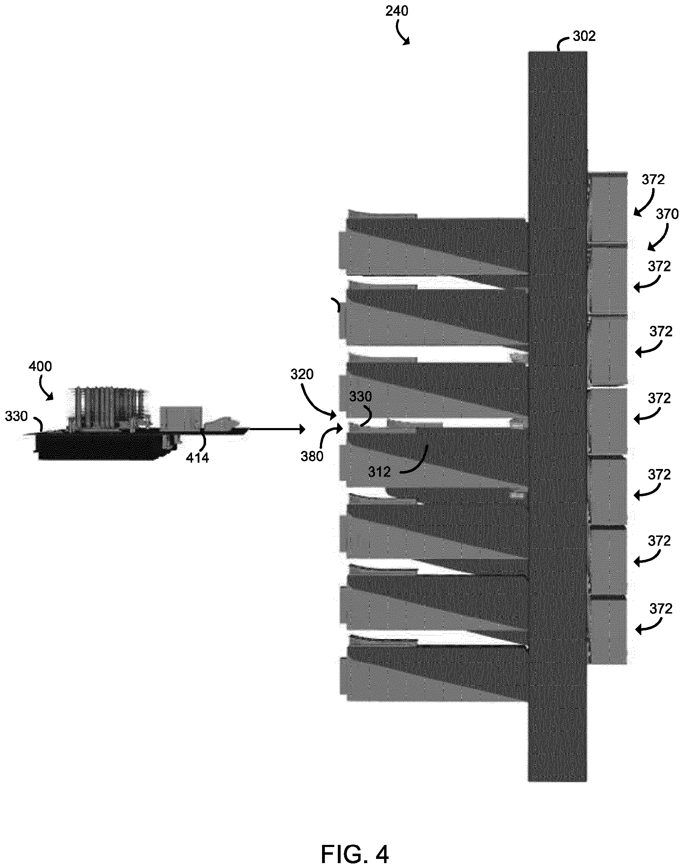

Each circuit board guide 330 includes an inner wall that defines a circuit board slot 380 configured to receive the chassis-less circuit board substrate of a sled 400 when the sled 400 is received in the corresponding sled slot 320 of the rack 240. To do so, as shown in FIG. 4, a user (or robot) aligns the chassis-less circuit board substrate of an illustrative chassis-less sled 400 to a sled slot 320. The user, or robot, may then slide the chassis-less circuit board substrate forward into the sled slot 320 such that each side edge 414 of the chassis-less circuit board substrate is received in a corresponding circuit board slot 380 of the circuit board guides 330 of the pair 310 of elongated support arms 312 that define the corresponding sled slot 320 as shown in FIG. 4. By having robotically accessible and robotically manipulable sleds comprising disaggregated resources, each type of resource can be upgraded independently of each other and at their own optimized refresh rate. Furthermore, the sleds are configured to blindly mate with power and data communication cables in each rack 240, enhancing their ability to be quickly removed, upgraded, reinstalled, and/or replaced. As such, in some embodiments, the data center 100 may operate (e.g., execute workloads, undergo maintenance and/or upgrades, etc.) without human involvement on the data center floor. In other embodiments, a human may facilitate one or more maintenance or upgrade operations in the data center 100.

It should be appreciated that each circuit board guide 330 is dual sided. That is, each circuit board guide 330 includes an inner wall that defines a circuit board slot 380 on each side of the circuit board guide 330. In this way, each circuit board guide 330 can support a chassis-less circuit board substrate on either side. As such, a single additional elongated support post may be added to the rack 240 to turn the rack 240 into a two-rack solution that can hold twice as many sled slots 320 as shown in Fig. 3. The illustrative rack 240 includes seven pairs 310 of elongated support arms 312 that define a corresponding seven sled slots 320, each configured to receive and support a corresponding sled 400 as discussed above. Of course, in other embodiments, the rack 240 may include additional or fewer pairs 310 of elongated support arms 312 (i.e., additional or fewer sled slots 320). It should be appreciated that because the sled 400 is chassis-less, the sled 400 may have an overall height that is different than typical servers. As such, in some embodiments, the height of each sled slot 320 may be shorter than the height of a typical server (e.g., shorter than a single rank unit, "1U"). That is, the vertical distance between each pair 310 of elongated support arms 312 may be less than a standard rack unit "1U." Additionally, due to the relative decrease in height of the sled slots 320, the overall height of the rack 240 in some embodiments may be shorter than the height of traditional rack enclosures. For example, in some embodiments, each of the elongated support posts 302, 304 may have a length of six feet or less. Again, in other embodiments, the rack 240 may have different dimensions. Further, it should be appreciated that the rack 240 does not include any walls, enclosures, or the like. Rather, the rack 240 is an enclosure-less rack that is opened to the local environment. Of course, in some cases, an end plate may be attached to one of the elongated support posts 302, 304 in those situations in which the rack 240 forms an end-of-row rack in the data center 100.

In some embodiments, various interconnects may be routed upwardly or downwardly through the elongated support posts 302, 304. To facilitate such routing, each elongated support post 302, 304 includes an inner wall that defines an inner chamber in which the interconnect may be located. The interconnects routed through the elongated support posts 302, 304 may be embodied as any type of interconnects including, but not limited to, data or communication interconnects to provide communication connections to each sled slot 320, power interconnects to provide power to each sled slot 320, and/or other types of interconnects.

The rack 240, in the illustrative embodiment, includes a support platform on which a corresponding optical data connector (not shown) is mounted. Each optical data connector is associated with a corresponding sled slot 320 and is configured to mate with an optical data connector of a corresponding sled 400 when the sled 400 is received in the corresponding sled slot 320. In some embodiments, optical connections between components (e.g., sleds, racks, and switches) in the data center 100 are made with a blind mate optical connection. For example, a door on each cable may prevent dust from contaminating the fiber inside the cable. In the process of connecting to a blind mate optical connector mechanism, the door is pushed open when the end of the cable enters the connector mechanism. Subsequently, the optical fiber inside the cable enters a gel within the connector mechanism and the optical fiber of one cable comes into contact with the optical fiber of another cable within the gel inside the connector mechanism.

The illustrative rack 240 also includes a fan array 370 coupled to the cross-support arms of the rack 240. The fan array 370 includes one or more rows of cooling fans 372, which are aligned in a horizontal line between the elongated support posts 302, 304. In the illustrative embodiment, the fan array 370 includes a row of cooling fans 372 for each sled slot 320 of the rack 240. As discussed above, each sled 400 does not include any on-board cooling system in the illustrative embodiment and, as such, the fan array 370 provides cooling for each sled 400 received in the rack 240. Each rack 240, in the illustrative embodiment, also includes a power supply associated with each sled slot 320. Each power supply is secured to one of the elongated support arms 312 of the pair 310 of elongated support arms 312 that define the corresponding sled slot 320. For example, the rack 240 may include a power supply coupled or secured to each elongated support arm 312 extending from the elongated support post 302. Each power supply includes a power connector configured to mate with a power connector of the sled 400 when the sled 400 is received in the corresponding sled slot 320. In the illustrative embodiment, the sled 400 does not include any on-board power supply and, as such, the power supplies provided in the rack 240 supply power to corresponding sleds 400 when mounted to the rack 240.

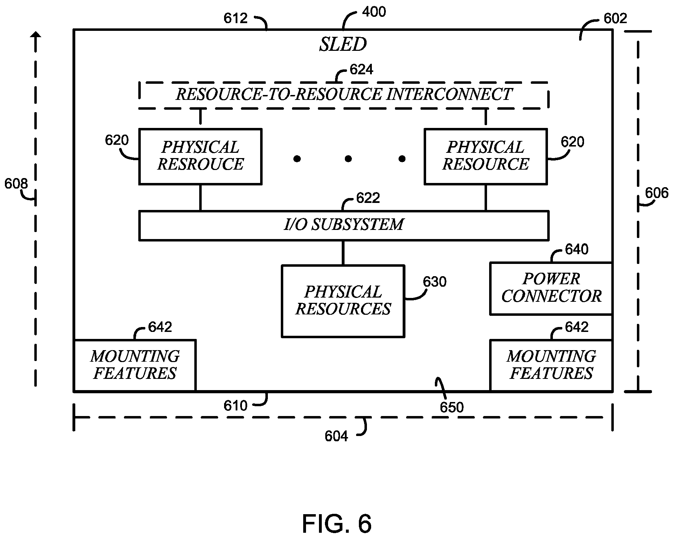

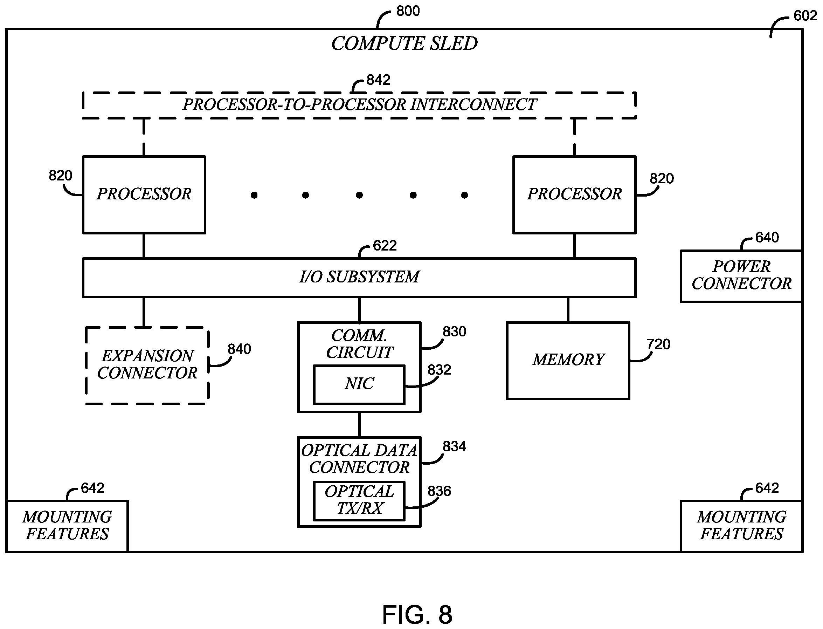

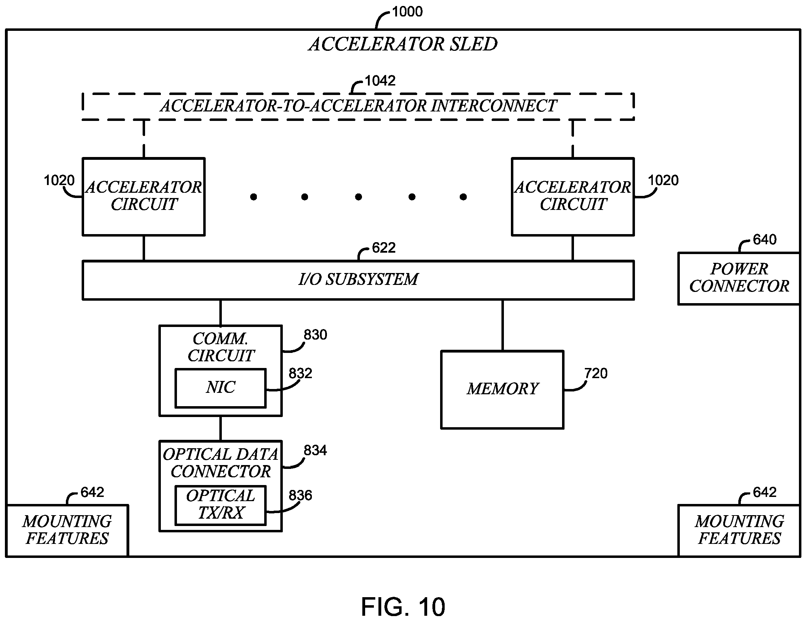

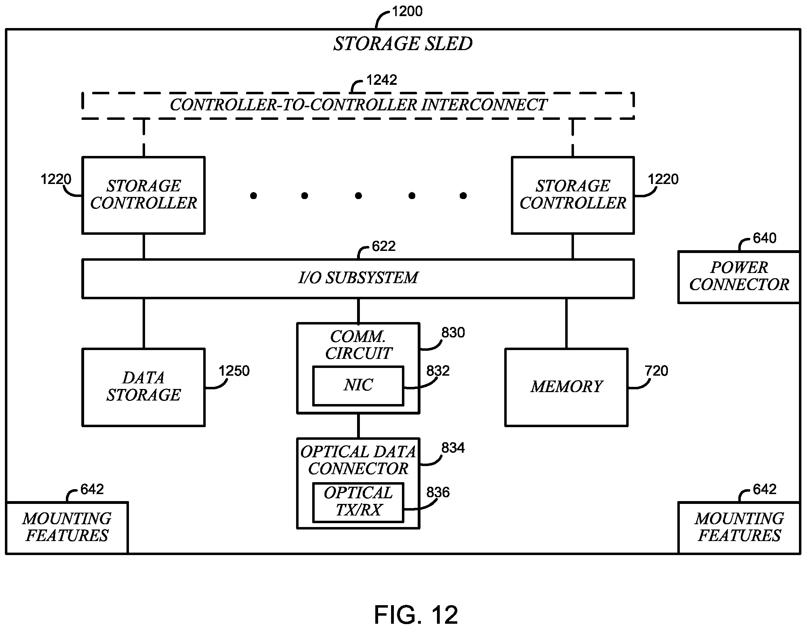

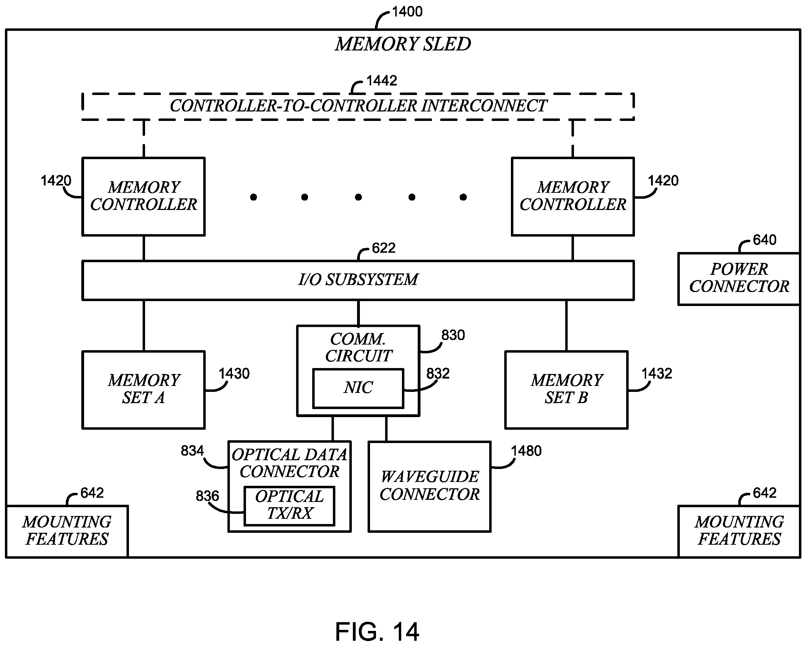

Referring now to FIG. 6, the sled 400, in the illustrative embodiment, is configured to be mounted in a corresponding rack 240 of the data center 100 as discussed above. In some embodiments, each sled 400 may be optimized or otherwise configured for performing particular tasks, such as compute tasks, acceleration tasks, data storage tasks, etc. For example, the sled 400 may be embodied as a compute sled 800 as discussed below in regard to FIGS. 8-9, an accelerator sled 1000 as discussed below in regard to FIGS. 10-11, a storage sled 1200 as discussed below in regard to FIGS. 12-13, or as a sled optimized or otherwise configured to perform other specialized tasks, such as a memory sled 1400, discussed below in regard to FIG. 14.

As discussed above, the illustrative sled 400 includes a chassis-less circuit board substrate 602, which supports various physical resources (e.g., electrical components) mounted thereon. It should be appreciated that the circuit board substrate 602 is "chassis-less" in that the sled 400 does not include a housing or enclosure. Rather, the chassis-less circuit board substrate 602 is open to the local environment. The chassis-less circuit board substrate 602 may be formed from any material capable of supporting the various electrical components mounted thereon. For example, in an illustrative embodiment, the chassis-less circuit board substrate 602 is formed from an FR-4 glass-reinforced epoxy laminate material. Of course, other materials may be used to form the chassis-less circuit board substrate 602 in other embodiments.

As discussed in more detail below, the chassis-less circuit board substrate 602 includes multiple features that improve the thermal cooling characteristics of the various electrical components mounted on the chassis-less circuit board substrate 602. As discussed, the chassis-less circuit board substrate 602 does not include a housing or enclosure, which may improve the airflow over the electrical components of the sled 400 by reducing those structures that may inhibit air flow. For example, because the chassis-less circuit board substrate 602 is not positioned in an individual housing or enclosure, there is no backplane (e.g., a backplate of the chassis) to the chassis-less circuit board substrate 602, which could inhibit air flow across the electrical components. Additionally, the chassis-less circuit board substrate 602 has a geometric shape configured to reduce the length of the airflow path across the electrical components mounted to the chassis-less circuit board substrate 602. For example, the illustrative chassis-less circuit board substrate 602 has a width 604 that is greater than a depth 606 of the chassis-less circuit board substrate 602. In one particular embodiment, for example, the chassis-less circuit board substrate 602 has a width of about 21 inches and a depth of about 9 inches, compared to a typical server that has a width of about 17 inches and a depth of about 39 inches. As such, an airflow path 608 that extends from a front edge 610 of the chassis-less circuit board substrate 602 toward a rear edge 612 has a shorter distance relative to typical servers, which may improve the thermal cooling characteristics of the sled 400. Furthermore, although not illustrated in FIG. 6, the various physical resources mounted to the chassis-less circuit board substrate 602 are mounted in corresponding locations such that no two substantively heat-producing electrical components shadow each other as discussed in more detail below. That is, no two electrical components, which produce appreciable heat during operation (i.e., greater than a nominal heat sufficient enough to adversely impact the cooling of another electrical component), are mounted to the chassis-less circuit board substrate 602 linearly in-line with each other along the direction of the airflow path 608 (i.e., along a direction extending from the front edge 610 toward the rear edge 612 of the chassis-less circuit board substrate 602).

As discussed above, the illustrative sled 400 includes one or more physical resources 620 mounted to a top side 650 of the chassis-less circuit board substrate 602. Although two physical resources 620 are shown in FIG. 6, it should be appreciated that the sled 400 may include one, two, or more physical resources 620 in other embodiments. The physical resources 620 may be embodied as any type of processor, controller, or other compute circuit capable of performing various tasks such as compute functions and/or controlling the functions of the sled 400 depending on, for example, the type or intended functionality of the sled 400. For example, as discussed in more detail below, the physical resources 620 may be embodied as high-performance processors in embodiments in which the sled 400 is embodied as a compute sled, as accelerator co-processors or circuits in embodiments in which the sled 400 is embodied as an accelerator sled, storage controllers in embodiments in which the sled 400 is embodied as a storage sled, or a set of memory devices in embodiments in which the sled 400 is embodied as a memory sled.

The sled 400 also includes one or more additional physical resources 630 mounted to the top side 650 of the chassis-less circuit board substrate 602. In the illustrative embodiment, the additional physical resources include a network interface controller (NIC) as discussed in more detail below. Of course, depending on the type and functionality of the sled 400, the physical resources 630 may include additional or other electrical components, circuits, and/or devices in other embodiments.

The physical resources 620 are communicatively coupled to the physical resources 630 via an input/output (I/O) subsystem 622. The I/O subsystem 622 may be embodied as circuitry and/or components to facilitate input/output operations with the physical resources 620, the physical resources 630, and/or other components of the sled 400. For example, the I/O subsystem 622 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In the illustrative embodiment, the I/O subsystem 622 is embodied as, or otherwise includes, a double data rate 4 (DDR4) data bus or a DDR5 data bus.

In some embodiments, the sled 400 may also include a resource-to-resource interconnect 624. The resource-to-resource interconnect 624 may be embodied as any type of communication interconnect capable of facilitating resource-to-resource communications. In the illustrative embodiment, the resource-to-resource interconnect 624 is embodied as a high-speed point-to-point interconnect (e.g., faster than the I/O subsystem 622). For example, the resource-to-resource interconnect 624 may be embodied as a QuickPath Interconnect (QPI), an UltraPath Interconnect (UPI), or other high-speed point-to-point interconnect dedicated to resource-to-resource communications.

The sled 400 also includes a power connector 640 configured to mate with a corresponding power connector of the rack 240 when the sled 400 is mounted in the corresponding rack 240. The sled 400 receives power from a power supply of the rack 240 via the power connector 640 to supply power to the various electrical components of the sled 400. That is, the sled 400 does not include any local power supply (i.e., an on-board power supply) to provide power to the electrical components of the sled 400. The exclusion of a local or on-board power supply facilitates the reduction in the overall footprint of the chassis-less circuit board substrate 602, which may increase the thermal cooling characteristics of the various electrical components mounted on the chassis-less circuit board substrate 602 as discussed above. In some embodiments, power is provided to the processors 820 through vias directly under the processors 820 (e.g., through the bottom side 750 of the chassis-less circuit board substrate 602), providing an increased thermal budget, additional current and/or voltage, and better voltage control over typical boards.

In some embodiments, the sled 400 may also include mounting features 642 configured to mate with a mounting arm, or other structure, of a robot to facilitate the placement of the sled 600 in a rack 240 by the robot. The mounting features 642 may be embodied as any type of physical structures that allow the robot to grasp the sled 400 without damaging the chassis-less circuit board substrate 602 or the electrical components mounted thereto. For example, in some embodiments, the mounting features 642 may be embodied as non-conductive pads attached to the chassis-less circuit board substrate 602. In other embodiments, the mounting features may be embodied as brackets, braces, or other similar structures attached to the chassis-less circuit board substrate 602. The particular number, shape, size, and/or make-up of the mounting feature 642 may depend on the design of the robot configured to manage the sled 400.

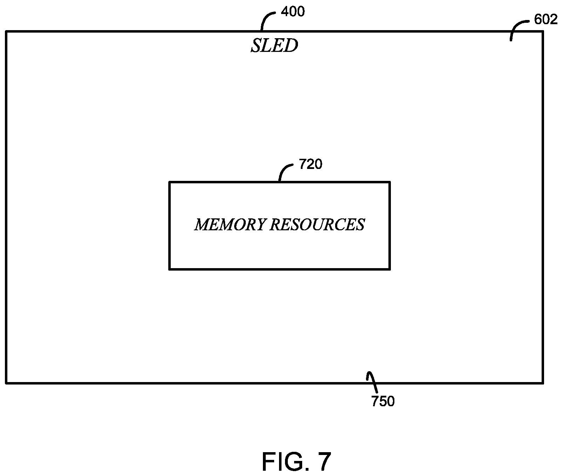

Referring now to FIG. 7, in addition to the physical resources 630 mounted on the top side 650 of the chassis-less circuit board substrate 602, the sled 400 also includes one or more memory devices 720 mounted to a bottom side 750 of the chassis-less circuit board substrate 602. That is, the chassis-less circuit board substrate 602 is embodied as a double-sided circuit board. The physical resources 620 are communicatively coupled to the memory devices 720 via the I/O subsystem 622. For example, the physical resources 620 and the memory devices 720 may be communicatively coupled by one or more vias extending through the chassis-less circuit board substrate 602. Each physical resource 620 may be communicatively coupled to a different set of one or more memory devices 720 in some embodiments. Alternatively, in other embodiments, each physical resource 620 may be communicatively coupled to each memory devices 720.

The memory devices 720 may be embodied as any type of memory device capable of storing data for the physical resources 620 during operation of the sled 400, such as any type of volatile (e.g., dynamic random access memory (DRAM), etc.) or non-volatile memory. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

In one embodiment, the memory device is a block addressable memory device, such as those based on NAND or NOR technologies. A memory device may also include next-generation nonvolatile devices, such as Intel 3D XPoint^{™} memory or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In some embodiments, the memory device may comprise a transistor-less stackable cross point architecture in which memory cells sit at the intersection of word lines and bit lines and are individually addressable and in which bit storage is based on a change in bulk resistance.

Referring now to FIG. 8, in some embodiments, the sled 400 may be embodied as a compute sled 800. The compute sled 800 is optimized, or otherwise configured, to perform compute tasks. Of course, as discussed above, the compute sled 800 may rely on other sleds, such as acceleration sleds and/or storage sleds, to perform such compute tasks. The compute sled 800 includes various physical resources (e.g., electrical components) similar to the physical resources of the sled 400, which have been identified in FIG. 8 using the same reference numbers. The description of such components provided above in regard to FIGS. 6 and 7 applies to the corresponding components of the compute sled 800 and is not repeated herein for clarity of the description of the compute sled 800.

In the illustrative compute sled 800, the physical resources 620 are embodied as processors 820. Although only two processors 820 are shown in FIG. 8, it should be appreciated that the compute sled 800 may include additional processors 820 in other embodiments. Illustratively, the processors 820 are embodied as high-performance processors 820 and may be configured to operate at a relatively high power rating. Although the processors 820 generate additional heat operating at power ratings greater than typical processors (which operate at around 155-230 W), the enhanced thermal cooling characteristics of the chassis-less circuit board substrate 602 discussed above facilitate the higher power operation. For example, in the illustrative embodiment, the processors 820 are configured to operate at a power rating of at least 250 W. In some embodiments, the processors 820 may be configured to operate at a power rating of at least 350 W.

In some embodiments, the compute sled 800 may also include a processor-to-processor interconnect 842. Similar to the resource-to-resource interconnect 624 of the sled 400 discussed above, the processor-to-processor interconnect 842 may be embodied as any type of communication interconnect capable of facilitating processor-to-processor interconnect 842 communications. In the illustrative embodiment, the processor-to-processor interconnect 842 is embodied as a high-speed point-to-point interconnect (e.g., faster than the I/O subsystem 622). For example, the processor-to-processor interconnect 842 may be embodied as a QuickPath Interconnect (QPI), an UltraPath Interconnect (UPI), or other high-speed point-to-point interconnect dedicated to processor-to-processor communications.

The compute sled 800 also includes a communication circuit 830. The illustrative communication circuit 830 includes a network interface controller (NIC) 832, which may also be referred to as a host fabric interface (HFI). The NIC 832 may be embodied as, or otherwise include, any type of integrated circuit, discrete circuits, controller chips, chipsets, add-in-boards, daughtercards, network interface cards, other devices that may be used by the compute sled 800 to connect with another compute device (e.g., with other sleds 400). In some embodiments, the NIC 832 may be embodied as part of a system-on-a-chip (SoC) that includes one or more processors, or included on a multichip package that also contains one or more processors. In some embodiments, the NIC 832 may include a local processor (not shown) and/or a local memory (not shown) that are both local to the NIC 832. In such embodiments, the local processor of the NIC 832 may be capable of performing one or more of the functions of the processors 820. Additionally or alternatively, in such embodiments, the local memory of the NIC 832 may be integrated into one or more components of the compute sled at the board level, socket level, chip level, and/or other levels.

The communication circuit 830 is communicatively coupled to an optical data connector 834. The optical data connector 834 is configured to mate with a corresponding optical data connector of the rack 240 when the compute sled 800 is mounted in the rack 240. Illustratively, the optical data connector 834 includes a plurality of optical fibers which lead from a mating surface of the optical data connector 834 to an optical transceiver 836. The optical transceiver 836 is configured to convert incoming optical signals from the rack-side optical data connector to electrical signals and to convert electrical signals to outgoing optical signals to the rack-side optical data connector. Although shown as forming part of the optical data connector 834 in the illustrative embodiment, the optical transceiver 836 may form a portion of the communication circuit 830 in other embodiments.

In some embodiments, the compute sled 800 may also include an expansion connector 840. In such embodiments, the expansion connector 840 is configured to mate with a corresponding connector of an expansion chassis-less circuit board substrate to provide additional physical resources to the compute sled 800. The additional physical resources may be used, for example, by the processors 820 during operation of the compute sled 800. The expansion chassis-less circuit board substrate may be substantially similar to the chassis-less circuit board substrate 602 discussed above and may include various electrical components mounted thereto. The particular electrical components mounted to the expansion chassis-less circuit board substrate may depend on the intended functionality of the expansion chassis-less circuit board substrate. For example, the expansion chassis-less circuit board substrate may provide additional compute resources, memory resources, and/or storage resources. As such, the additional physical resources of the expansion chassis-less circuit board substrate may include, but is not limited to, processors, memory devices, storage devices, and/or accelerator circuits including, for example, field programmable gate arrays (FPGA), application-specific integrated circuits (ASICs), security co-processors, graphics processing units (GPUs), machine learning circuits, or other specialized processors, controllers, devices, and/or circuits.

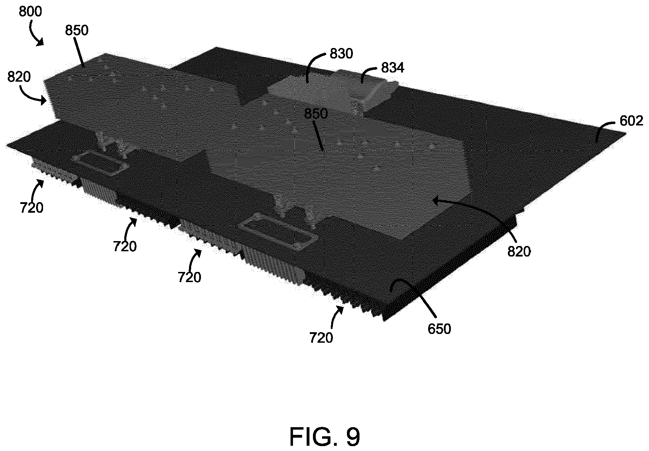

Referring now to FIG. 9, an illustrative embodiment of the compute sled 800 is shown. As shown, the processors 820, communication circuit 830, and optical data connector 834 are mounted to the top side 650 of the chassis-less circuit board substrate 602. Any suitable attachment or mounting technology may be used to mount the physical resources of the compute sled 800 to the chassis-less circuit board substrate 602. For example, the various physical resources may be mounted in corresponding sockets (e.g., a processor socket), holders, or brackets. In some cases, some of the electrical components may be directly mounted to the chassis-less circuit board substrate 602 via soldering or similar techniques.

As discussed above, the individual processors 820 and communication circuit 830 are mounted to the top side 650 of the chassis-less circuit board substrate 602 such that no two heat-producing, electrical components shadow each other. In the illustrative embodiment, the processors 820 and communication circuit 830 are mounted in corresponding locations on the top side 650 of the chassis-less circuit board substrate 602 such that no two of those physical resources are linearly in-line with others along the direction of the airflow path 608. It should be appreciated that, although the optical data connector 834 is in-line with the communication circuit 830, the optical data connector 834 produces no or nominal heat during operation.

The memory devices 720 of the compute sled 800 are mounted to the bottom side 750 of the of the chassis-less circuit board substrate 602 as discussed above in regard to the sled 400. Although mounted to the bottom side 750, the memory devices 720 are communicatively coupled to the processors 820 located on the top side 650 via the I/O subsystem 622. Because the chassis-less circuit board substrate 602 is embodied as a double-sided circuit board, the memory devices 720 and the processors 820 may be communicatively coupled by one or more vias, connectors, or other mechanisms extending through the chassis-less circuit board substrate 602. Of course, each processor 820 may be communicatively coupled to a different set of one or more memory devices 720 in some embodiments. Alternatively, in other embodiments, each processor 820 may be communicatively coupled to each memory device 720. In some embodiments, the memory devices 720 may be mounted to one or more memory mezzanines on the bottom side of the chassis-less circuit board substrate 602 and may interconnect with a corresponding processor 820 through a ball-grid array.

Each of the processors 820 includes a heatsink 850 secured thereto. Due to the mounting of the memory devices 720 to the bottom side 750 of the chassis-less circuit board substrate 602 (as well as the vertical spacing of the sleds 400 in the corresponding rack 240), the top side 650 of the chassis-less circuit board substrate 602 includes additional "free" area or space that facilitates the use of heatsinks 850 having a larger size relative to traditional heatsinks used in typical servers. Additionally, due to the improved thermal cooling characteristics of the chassis-less circuit board substrate 602, none of the processor heatsinks 850 include cooling fans attached thereto. That is, each of the heatsinks 850 is embodied as a fan-less heatsinks.

Referring now to FIG. 10, in some embodiments, the sled 400 may be embodied as an accelerator sled 1000. The accelerator sled 1000 is optimized, or otherwise configured, to perform specialized compute tasks, such as machine learning, encryption, hashing, or other computational-intensive task. In some embodiments, for example, a compute sled 800 may offload tasks to the accelerator sled 1000 during operation. The accelerator sled 1000 includes various components similar to components of the sled 400 and/or compute sled 800, which have been identified in FIG. 10 using the same reference numbers. The description of such components provided above in regard to FIGS. 6, 7, and 8 apply to the corresponding components of the accelerator sled 1000 and is not repeated herein for clarity of the description of the accelerator sled 1000.

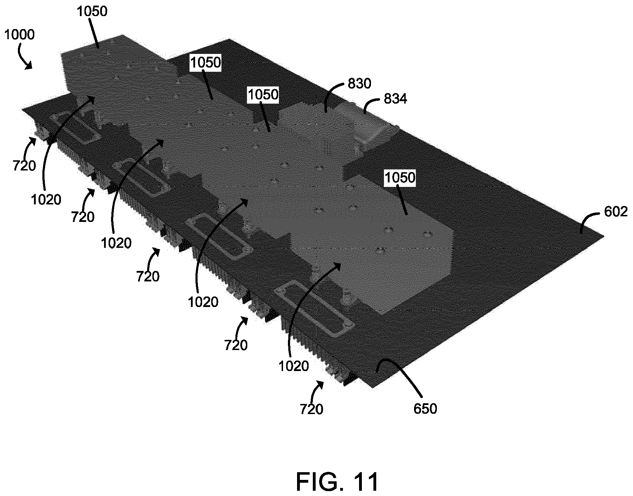

In the illustrative accelerator sled 1000, the physical resources 620 are embodied as accelerator circuits 1020. Although only two accelerator circuits 1020 are shown in FIG. 10, it should be appreciated that the accelerator sled 1000 may include additional accelerator circuits 1020 in other embodiments. For example, as shown in FIG. 11, the accelerator sled 1000 may include four accelerator circuits 1020 in some embodiments. The accelerator circuits 1020 may be embodied as any type of processor, co-processor, compute circuit, or other device capable of performing compute or processing operations. For example, the accelerator circuits 1020 may be embodied as, for example, field programmable gate arrays (FPGA), application-specific integrated circuits (ASICs), security co-processors, graphics processing units (GPUs), machine learning circuits, or other specialized processors, controllers, devices, and/or circuits.

In some embodiments, the accelerator sled 1000 may also include an accelerator-to-accelerator interconnect 1042. Similar to the resource-to-resource interconnect 624 of the sled 600 discussed above, the accelerator-to-accelerator interconnect 1042 may be embodied as any type of communication interconnect capable of facilitating accelerator-to-accelerator communications. In the illustrative embodiment, the accelerator-to-accelerator interconnect 1042 is embodied as a high-speed point-to-point interconnect (e.g., faster than the I/O subsystem 622). For example, the accelerator-to-accelerator interconnect 1042 may be embodied as a QuickPath Interconnect (QPI), an UltraPath Interconnect (UPI), or other high-speed point-to-point interconnect dedicated to processor-to-processor communications. In some embodiments, the accelerator circuits 1020 may be daisy-chained with a primary accelerator circuit 1020 connected to the NIC 832 and memory 720 through the I/O subsystem 622 and a secondary accelerator circuit 1020 connected to the NIC 832 and memory 720 through a primary accelerator circuit 1020.

Referring now to FIG. 11, an illustrative embodiment of the accelerator sled 1000 is shown. As discussed above, the accelerator circuits 1020, communication circuit 830, and optical data connector 834 are mounted to the top side 650 of the chassis-less circuit board substrate 602. Again, the individual accelerator circuits 1020 and communication circuit 830 are mounted to the top side 650 of the chassis-less circuit board substrate 602 such that no two heat-producing, electrical components shadow each other as discussed above. The memory devices 720 of the accelerator sled 1000 are mounted to the bottom side 750 of the of the chassis-less circuit board substrate 602 as discussed above in regard to the sled 600. Although mounted to the bottom side 750, the memory devices 720 are communicatively coupled to the accelerator circuits 1020 located on the top side 650 via the I/O subsystem 622 (e.g., through vias). Further, each of the accelerator circuits 1020 may include a heatsink 1070 that is larger than a traditional heatsink used in a server. As discussed above with reference to the heatsinks 870, the heatsinks 1070 may be larger than tradition heatsinks because of the "free" area provided by the memory devices 750 being located on the bottom side 750 of the chassis-less circuit board substrate 602 rather than on the top side 650.

Referring now to FIG. 12, in some embodiments, the sled 400 may be embodied as a storage sled 1200. The storage sled 1200 is optimized, or otherwise configured, to store data in a data storage 1250 local to the storage sled 1200. For example, during operation, a compute sled 800 or an accelerator sled 1000 may store and retrieve data from the data storage 1250 of the storage sled 1200. The storage sled 1200 includes various components similar to components of the sled 400 and/or the compute sled 800, which have been identified in FIG. 12 using the same reference numbers. The description of such components provided above in regard to FIGS. 6, 7, and 8 apply to the corresponding components of the storage sled 1200 and is not repeated herein for clarity of the description of the storage sled 1200.

In the illustrative storage sled 1200, the physical resources 620 are embodied as storage controllers 1220. Although only two storage controllers 1220 are shown in FIG. 12, it should be appreciated that the storage sled 1200 may include additional storage controllers 1220 in other embodiments. The storage controllers 1220 may be embodied as any type of processor, controller, or control circuit capable of controlling the storage and retrieval of data into the data storage 1250 based on requests received via the communication circuit 830. In the illustrative embodiment, the storage controllers 1220 are embodied as relatively low-power processors or controllers. For example, in some embodiments, the storage controllers 1220 may be configured to operate at a power rating of about 75 watts.

In some embodiments, the storage sled 1200 may also include a controller-to-controller interconnect 1242. Similar to the resource-to-resource interconnect 624 of the sled 400 discussed above, the controller-to-controller interconnect 1242 may be embodied as any type of communication interconnect capable of facilitating controller-to-controller communications. In the illustrative embodiment, the controller-to-controller interconnect 1242 is embodied as a high-speed point-to-point interconnect (e.g., faster than the I/O subsystem 622). For example, the controller-to-controller interconnect 1242 may be embodied as a QuickPath Interconnect (QPI), an UltraPath Interconnect (UPI), or other high-speed point-to-point interconnect dedicated to processor-to-processor communications.

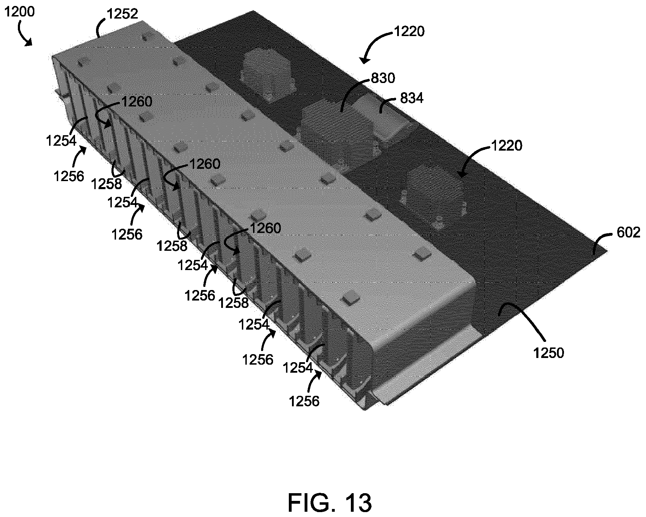

Referring now to FIG. 13, an illustrative embodiment of the storage sled 1200 is shown. In the illustrative embodiment, the data storage 1250 is embodied as, or otherwise includes, a storage cage 1252 configured to house one or more solid state drives (SSDs) 1254. To do so, the storage cage 1252 includes a number of mounting slots 1256, each of which is configured to receive a corresponding solid state drive 1254. Each of the mounting slots 1256 includes a number of drive guides 1258 that cooperate to define an access opening 1260 of the corresponding mounting slot 1256. The storage cage 1252 is secured to the chassis-less circuit board substrate 602 such that the access openings face away from (i.e., toward the front of) the chassis-less circuit board substrate 602. As such, solid state drives 1254 are accessible while the storage sled 1200 is mounted in a corresponding rack 204. For example, a solid state drive 1254 may be swapped out of a rack 240 (e.g., via a robot) while the storage sled 1200 remains mounted in the corresponding rack 240.

The storage cage 1252 illustratively includes sixteen mounting slots 1256 and is capable of mounting and storing sixteen solid state drives 1254. Of course, the storage cage 1252 may be configured to store additional or fewer solid state drives 1254 in other embodiments. Additionally, in the illustrative embodiment, the solid state drivers are mounted vertically in the storage cage 1252, but may be mounted in the storage cage 1252 in a different orientation in other embodiments. Each solid state drive 1254 may be embodied as any type of data storage device capable of storing long term data. To do so, the solid state drives 1254 may include volatile and non-volatile memory devices discussed above.

As shown in FIG. 13, the storage controllers 1220, the communication circuit 830, and the optical data connector 834 are illustratively mounted to the top side 650 of the chassis-less circuit board substrate 602. Again, as discussed above, any suitable attachment or mounting technology may be used to mount the electrical components of the storage sled 1200 to the chassis-less circuit board substrate 602 including, for example, sockets (e.g., a processor socket), holders, brackets, soldered connections, and/or other mounting or securing techniques.

As discussed above, the individual storage controllers 1220 and the communication circuit 830 are mounted to the top side 650 of the chassis-less circuit board substrate 602 such that no two heat-producing, electrical components shadow each other. For example, the storage controllers 1220 and the communication circuit 830 are mounted in corresponding locations on the top side 650 of the chassis-less circuit board substrate 602 such that no two of those electrical components are linearly in-line with other along the direction of the airflow path 608.

The memory devices 720 of the storage sled 1200 are mounted to the bottom side 750 of the of the chassis-less circuit board substrate 602 as discussed above in regard to the sled 400. Although mounted to the bottom side 750, the memory devices 720 are communicatively coupled to the storage controllers 1220 located on the top side 650 via the I/O subsystem 622. Again, because the chassis-less circuit board substrate 602 is embodied as a double-sided circuit board, the memory devices 720 and the storage controllers 1220 may be communicatively coupled by one or more vias, connectors, or other mechanisms extending through the chassis-less circuit board substrate 602. Each of the storage controllers 1220 includes a heatsink 1270 secured thereto. As discussed above, due to the improved thermal cooling characteristics of the chassis-less circuit board substrate 602 of the storage sled 1200, none of the heatsinks 1270 include cooling fans attached thereto. That is, each of the heatsinks 1270 is embodied as a fan-less heatsink.

Referring now to FIG. 14, in some embodiments, the sled 400 may be embodied as a memory sled 1400. The storage sled 1400 is optimized, or otherwise configured, to provide other sleds 400 (e.g., compute sleds 800, accelerator sleds 1000, etc.) with access to a pool of memory (e.g., in two or more sets 1430, 1432 of memory devices 720) local to the memory sled 1200. For example, during operation, a compute sled 800 or an accelerator sled 1000 may remotely write to and/or read from one or more of the memory sets 1430, 1432 of the memory sled 1200 using a logical address space that maps to physical addresses in the memory sets 1430, 1432. The memory sled 1400 includes various components similar to components of the sled 400 and/or the compute sled 800, which have been identified in FIG. 14 using the same reference numbers. The description of such components provided above in regard to FIGS. 6, 7, and 8 apply to the corresponding components of the memory sled 1400 and is not repeated herein for clarity of the description of the memory sled 1400.

In the illustrative memory sled 1400, the physical resources 620 are embodied as memory controllers 1420. Although only two memory controllers 1420 are shown in FIG. 14, it should be appreciated that the memory sled 1400 may include additional memory controllers 1420 in other embodiments. The memory controllers 1420 may be embodied as any type of processor, controller, or control circuit capable of controlling the writing and reading of data into the memory sets 1430, 1432 based on requests received via the communication circuit 830. In the illustrative embodiment, each storage controller 1220 is connected to a corresponding memory set 1430, 1432 to write to and read from memory devices 720 within the corresponding memory set 1430, 1432 and enforce any permissions (e.g., read, write, etc.) associated with sled 400 that has sent a request to the memory sled 1400 to perform a memory access operation (e.g., read or write).

In some embodiments, the memory sled 1400 may also include a controller-to-controller interconnect 1442. Similar to the resource-to-resource interconnect 624 of the sled 400 discussed above, the controller-to-controller interconnect 1442 may be embodied as any type of communication interconnect capable of facilitating controller-to-controller communications. In the illustrative embodiment, the controller-to-controller interconnect 1442 is embodied as a high-speed point-to-point interconnect (e.g., faster than the I/O subsystem 622). For example, the controller-to-controller interconnect 1442 may be embodied as a QuickPath Interconnect (QPI), an UltraPath Interconnect (UPI), or other high-speed point-to-point interconnect dedicated to processor-to-processor communications. As such, in some embodiments, a memory controller 1420 may access, through the controller-to-controller interconnect 1442, memory that is within the memory set 1432 associated with another memory controller 1420. In some embodiments, a scalable memory controller is made of multiple smaller memory controllers, referred to herein as "chiplets", on a memory sled (e.g., the memory sled 1400). The chiplets may be interconnected (e.g., using EMIB (Embedded Multi-Die Interconnect Bridge)). The combined chiplet memory controller may scale up to a relatively large number of memory controllers and I/O ports, (e.g., up to 16 memory channels). In some embodiments, the memory controllers 1420 may implement a memory interleave (e.g., one memory address is mapped to the memory set 1430, the next memory address is mapped to the memory set 1432, and the third address is mapped to the memory set 1430, etc.). The interleaving may be managed within the memory controllers 1420, or from CPU sockets (e.g., of the compute sled 800) across network links to the memory sets 1430, 1432, and may improve the latency associated with performing memory access operations as compared to accessing contiguous memory addresses from the same memory device.

Further, in some embodiments, the memory sled 1400 may be connected to one or more other sleds 400 (e.g., in the same rack 240 or an adjacent rack 240) through a waveguide, using the waveguide connector 1480. In the illustrative embodiment, the waveguides are 64 millimeter waveguides that provide 16 Rx (i.e., receive) lanes and 16 Rt (i.e., transmit) lanes. Each lane, in the illustrative embodiment, is either 16 Ghz or 32 Ghz. In other embodiments, the frequencies may be different. Using a waveguide may provide high throughput access to the memory pool (e.g., the memory sets 1430, 1432) to another sled (e.g., a sled 400 in the same rack 240 or an adjacent rack 240 as the memory sled 1400) without adding to the load on the optical data connector 834.

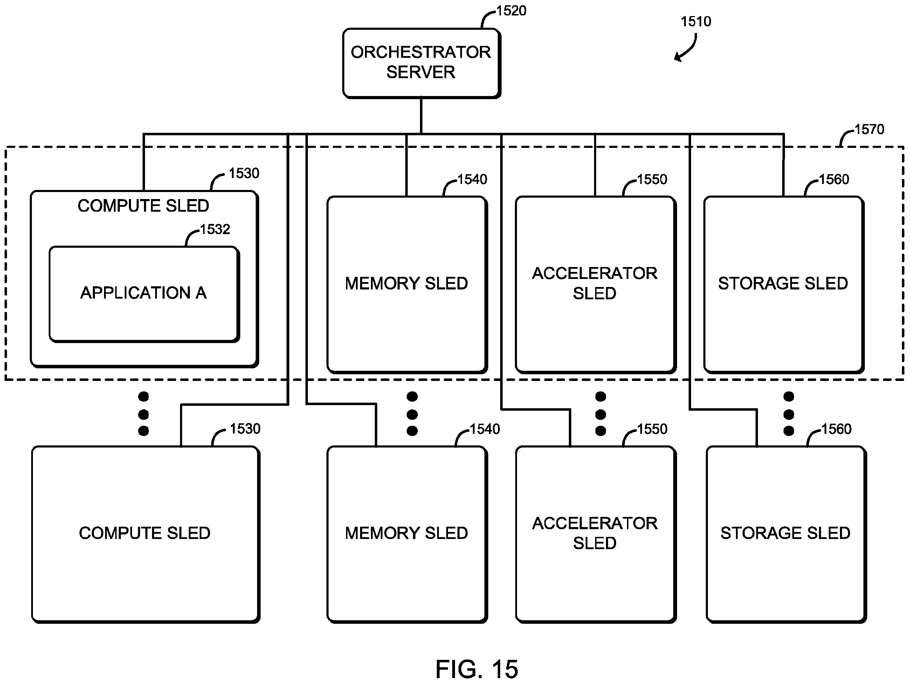

Referring now to FIG. 15, a system for executing one or more workloads (e.g., applications) may be implemented in accordance with the data center 100. In the illustrative embodiment, the system 1510 includes an orchestrator server 1520, which may be embodied as a managed node comprising a compute device (e.g., a compute sled 800) executing management software (e.g., a cloud operating environment, such as OpenStack) that is communicatively coupled to multiple sleds 400 including a large number of compute sleds 1530 (e.g., each similar to the compute sled 800), memory sleds 1540 (e.g., each similar to the memory sled 1400), accelerator sleds 1550 (e.g., each similar to the memory sled 1000), and storage sleds 1560 (e.g., each similar to the storage sled 1200). One or more of the sleds 1530, 1540, 1550, 1560 may be grouped into a managed node 1570, such as by the orchestrator server 1520, to collectively perform a workload (e.g., an application 1532 executed in a virtual machine or in a container). The managed node 1570 may be embodied as an assembly of physical resources 620, such as processors 820, memory resources 720, accelerator circuits 1020, or data storage 1250, from the same or different sleds 400. Further, the managed node may be established, defined, or "spun up" by the orchestrator server 1520 at the time a workload is to be assigned to the managed node or at any other time, and may exist regardless of whether any workloads are presently assigned to the managed node. In the illustrative embodiment, the orchestrator server 1520 may selectively allocate and/or deallocate physical resources 620 from the sleds 400 and/or add or remove one or more sleds 400 from the managed node 1570 as a function of quality of service (QoS) targets (e.g., performance targets associated with a throughput, latency, instructions per second, etc.) associated with a service level agreement for the workload (e.g., the application 1532). In doing so, the orchestrator server 1520 may receive telemetry data indicative of performance conditions (e.g., throughput, latency, instructions per second, etc.) in each sled 400 of the managed node 1570 and compare the telemetry data to the quality of service targets to determine whether the quality of service targets are being satisfied. If the so, the orchestrator server 1520 may additionally determine whether one or more physical resources may be deallocated from the managed node 1570 while still satisfying the QoS targets, thereby freeing up those physical resources for use in another managed node (e.g., to execute a different workload). Alternatively, if the QoS targets are not presently satisfied, the orchestrator server 1520 may determine to dynamically allocate additional physical resources to assist in the execution of the workload (e.g., the application 1532) while the workload is executing

Additionally, in some embodiments, the orchestrator server 1520 may identify trends in the resource utilization of the workload (e.g., the application 1532), such as by identifying phases of execution (e.g., time periods in which different operations, each having different resource utilizations characteristics, are performed) of the workload (e.g., the application 1532) and pre-emptively identifying available resources in the data center 100 and allocating them to the managed node 1570 (e.g., within a predefined time period of the associated phase beginning). In some embodiments, the orchestrator server 1520 may model performance based on various latencies and a distribution scheme to place workloads among compute sleds and other resources (e.g., accelerator sleds, memory sleds, storage sleds) in the data center 100. For example, the orchestrator server 1520 may utilize a model that accounts for the performance of resources on the sleds 400 (e.g., FPGA performance, memory access latency, etc.) and the performance (e.g., congestion, latency, bandwidth) of the path through the network to the resource (e.g., FPGA). As such, the orchestrator server 1520 may determine which resource(s) should be used with which workloads based on the total latency associated with each potential resource available in the data center 100 (e.g., the latency associated with the performance of the resource itself in addition to the latency associated with the path through the network between the compute sled executing the workload and the sled 400 on which the resource is located).

In some embodiments, the orchestrator server 1520 may generate a map of heat generation in the data center 100 using telemetry data (e.g., temperatures, fan speeds, etc.) reported from the sleds 400 and allocate resources to managed nodes as a function of the map of heat generation and predicted heat generation associated with different workloads, to maintain a target temperature and heat distribution in the data center 100. Additionally or alternatively, in some embodiments, the orchestrator server 1520 may organize received telemetry data into a hierarchical model that is indicative of a relationship between the managed nodes (e.g., a spatial relationship such as the physical locations of the resources of the managed nodes within the data center 100 and/or a functional relationship, such as groupings of the managed nodes by the customers the managed nodes provide services for, the types of functions typically performed by the managed nodes, managed nodes that typically share or exchange workloads among each other, etc.). Based on differences in the physical locations and resources in the managed nodes, a given workload may exhibit different resource utilizations (e.g., cause a different internal temperature, use a different percentage of processor or memory capacity) across the resources of different managed nodes. The orchestrator server 1520 may determine the differences based on the telemetry data stored in the hierarchical model and factor the differences into a prediction of future resource utilization of a workload if the workload is reassigned from one managed node to another managed node, to accurately balance resource utilization in the data center 100.

To reduce the computational load on the orchestrator server 1520 and the data transfer load on the network, in some embodiments, the orchestrator server 1520 may send self-test information to the sleds 400 to enable each sled 400 to locally (e.g., on the sled 400) determine whether telemetry data generated by the sled 400 satisfies one or more conditions (e.g., an available capacity that satisfies a predefined threshold, a temperature that satisfies a predefined threshold, etc.). Each sled 400 may then report back a simplified result (e.g., yes or no) to the orchestrator server 1520, which the orchestrator server 1520 may utilize in determining the allocation of resources to managed nodes.

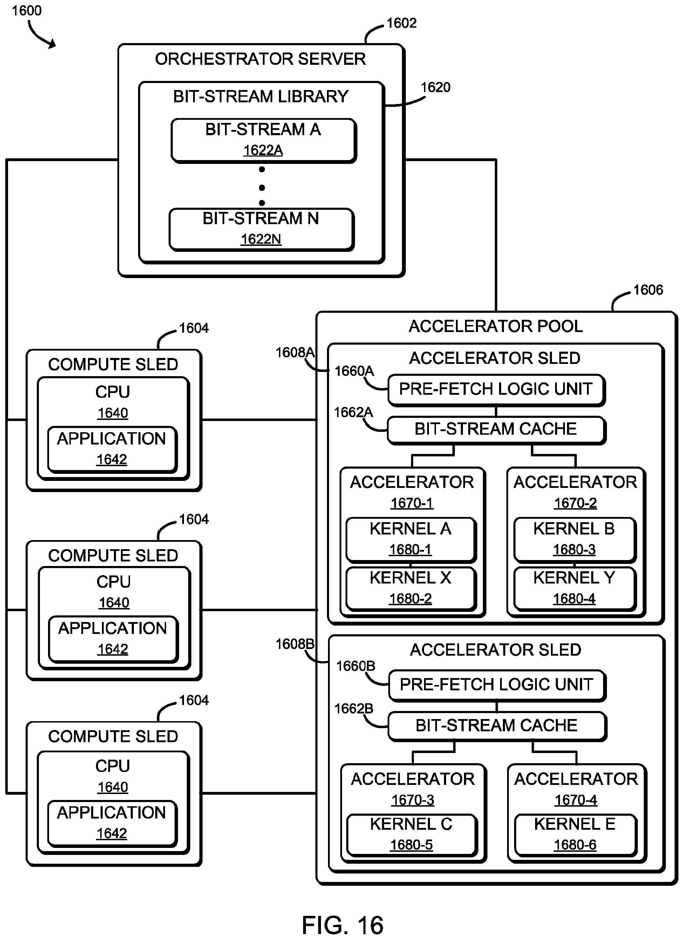

Referring now to FIG. 16, a system 1600, which may be implemented in accordance with the data center 100 described above with reference to FIG. 1 for predicting a bit-stream 1622 to pre-register the predicted bit-stream 1622 on an accelerator that may execute a next job to be requested for acceleration includes an orchestrator server 1602 in communication with a plurality of compute sleds 1604 (e.g., sleds 400 with physical resources 620, compute sleds 800, 1530) from the same or different racks (e.g., one or more of racks 240) and an accelerator pool 1606 which includes a plurality of accelerator sleds 1608A, 1608B (e.g., sleds 400 with physical resources 620, accelerator sleds 1000, 1550,) from the same or different racks (e.g., one or more of racks 240). It should be appreciated that the job may be one or more tasks of an application or workload. It should be understood that in other embodiments, the system 1600 may include a different number of the compute sleds 1604, accelerator sleds 1608, and/or other sleds (e.g., memory sleds or storage sleds).

In use, as described in more detail below, the orchestrator server 1602 of the system 1600 may predict a next job to be requested from a compute sled 1604 to be accelerated and a bit-stream 1622 that is capable of executing the predicted next job. It should be appreciated that a bit-stream 1622 may be an executable code usable to implement a set of functions and is also referred to as a kernel 1680 when the bit-stream 1622 is registered and executed on an accelerator 1670. The bit-stream 1622 may be embodied as any set of instructions executable by an accelerator 1670 to perform a corresponding function. For example, the bit-stream 1622 may be embodied as a set of instructions for performing a cryptographic function, an arithmetic function, a hashing function, and/or other functions performable by an accelerator 1670. Based on the characteristics of the predicted bit-stream 1622 and the next job, the orchestrator server 1602 may determine an available accelerator 1670-1, 1670-2, 1670-3, or 1670-4 that is capable of executing the predicted next job and configure the determined accelerator 1670-1, 1670-2, 1670-3, or 1670-4 to pre-register the predicted bit-stream 1622. By managing the future bit-stream registration and pre-configuring the accelerators 1670, the illustrative system 1600 may reduce an overall execution time, which typically includes the time that elapses as an accelerator 1670 that satisfies the bit-stream requirements is being determined and the time that passes as the bit-stream 1622 is being registered on the determined accelerator 1670.

The orchestrator server 1602 may be embodied as any type of compute device capable of performing the functions described herein, including predicting a next job to be requested for acceleration, predicting a bit-stream 1622 that is capable of executing the predicted next job, and configuring an accelerator 1670 to register the predicted bit-stream 1622. As shown in FIG. 16, the illustrative orchestrator server 1602 includes a bit-stream library 1620, which stores bit-streams 1622 that are presently registered on the accelerators 1670-1, 1670-2, 1670-3, and 1670-4 of the system 1600. Further, the orchestrator server 1602, in operation, tracks the bit-streams 1622 that are presently registered on the accelerators 1670-1, 1670-2, 1670-3, and 1670-4. In some embodiments, the bit-stream library 1620 may further store the bit-streams 1622 that have been previously registered on the accelerators 1670-1, 1670-2, 1670-3, and 1670-4. In the illustrative embodiment, the orchestrator server 1602 may select a bit-stream 1622 from the bit-stream library 1620 that is predicted to receive the predicted next job. In some embodiments, the orchestrator server 1602 may support a cloud operating environment, such as OpenStack, and the accelerator pool 1606 and the compute sleds 1604 may execute one or more applications or processes (i.e., jobs or workloads), such as in virtual machines or containers.

The compute sled 1604 may be embodied as any type of compute device that has central processing unit (CPU) 1640 capable of executing a workload (e.g., an application 1642) and performing the other functions described herein, including requesting the accelerators 1670 via the orchestrator server 1602 to accelerate a job. For example, the compute sled 1604 may be embodied as a compute sled 800, 1530, a computer, a distributed computing system, a multiprocessor system, a network appliance (e.g., physical or virtual), a desktop computer, a workstation, a laptop computer, a notebook computer, a processor-based system, or a network appliance.

In the illustrative embodiment, the accelerator pool 1606 includes two accelerator sleds 1608A, 1608B, and each accelerator sled 1608A, 1608B includes a pre-fetch logic unit 1660A, 1660B, a bit-stream cache 1662A, 1662B, and two accelerators 1670-1, 1670-2 or 1670-3, 1670-4. It should be appreciated that the accelerator sled 1608 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component. It should be understood that in other embodiments, the accelerator pool 1606 may include a different number of the accelerator sleds 1608A, 1608B and each accelerator sled 1608A, 1608B may include a different number of accelerators 1670. It should be appreciated that, in other embodiments, one or more of the illustrative components may be incorporated in, or otherwise form a portion of, another component.

The accelerator 1670 may be embodied as a single device such as an integrated circuit, an embedded system, a field-programmable-array (FPGA), a system-on-a-chip (SOC), an application specific integrated circuit (ASIC), reconfigurable hardware or hardware circuitry, or other specialized hardware capable of communicating with the compute sleds 1604 and the orchestrator server 1602 to pre-register a predicted bit-stream 1622 to execute a next job to be requested for acceleration from the compute sled 1604. In the illustrative embodiment, each accelerator 1670-1, 1670-2, 1670-3, 1670-4 includes two kernels 1680 (e.g., each a set of circuitry and/or executable code usable to implement a set of functions, i.e., a bit-stream 1622) registered on each accelerator 1670-1, 1670-2, 1670-3, 1670-4. However, it should be understood that in other embodiments, each accelerator 1670 may include a different number of kernels 1680 on the corresponding accelerator 1670.

In the illustrative embodiment as shown in FIG. 16, the accelerator sled 1608 further includes a pre-fetch logic unit 1660 and a bit-stream cache 1662. The pre-fetch logic unit 1660 may be embodied as circuitry, components, or any type of devices capable of pre-fetching a bit-stream 1622 from the bit-stream library 1620 of the orchestrator server 1602 that is predicted to execute the predicted next job to be received from a compute sled 1604. For example, if the orchestrator server 1602 determines to configure the accelerator 1670-1 of the accelerator sled 1608A to register the predict bit-stream A 1622A, the pre-fetch logic unit 1660A of the accelerator sled 1608A fetches the predicted bit-stream 1622 from the bit-stream library 1620 and registers the predicted bit-stream 1622 on the accelerator 1670-1. In some embodiments, the pre-fetch logic unit 1660 may be embodied as a co-processor, embedded circuit, ASIC, FPGA, and/or other specialized circuitry.

The bit-stream cache 1662 may be embodied as any device or circuitry capable of determining bit-stream registration data of each accelerator 1670 on the corresponding accelerator sled 1608 and transmitting the bit-stream registration data to the orchestrator server 1602. For example, the bit-stream registration data includes one or more bit-streams 1622 that are presently registered on each accelerator 1670 on the corresponding accelerator sled 1608. In some embodiments, the bit-stream cache 1662 may update a timestamp of a bit-stream registration and execution on one of the accelerators 1670 of the corresponding accelerator sled 1608 and transmit updated timestamp data to the orchestrator server 1602 to update the bit-stream library 1620. It should be appreciated that the timestamp of each bit-stream 1622 may be used to determine an execution pattern of each bit-stream 1622 for each available application 1642 as discussed further below. Further, in some embodiments, the bit-stream cache 1662 may include one or more security signatures (e.g., unique codes) usable to authenticate an incoming bit-stream (e.g., to prevent registering or executing a rogue bit-stream).

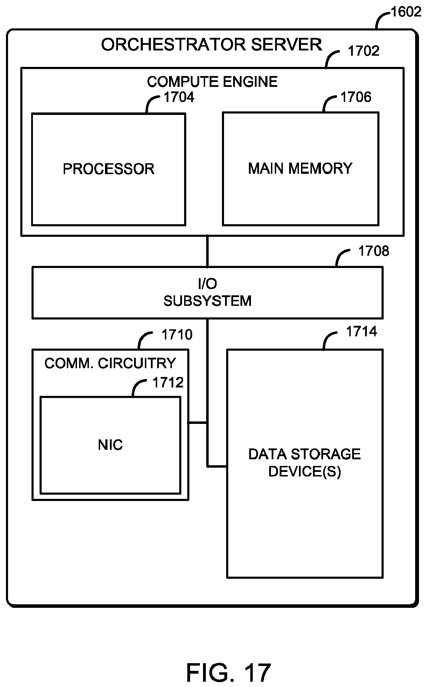

Referring now to FIG. 17, the orchestrator server 1602 may be embodied as any type of compute device capable of performing the functions described herein, including determining one or more bit-streams registered on each accelerator of multiple accelerators, predicting a next job to be requested for acceleration from an application of a compute sled of multiple compute sleds, predicting a bit-stream from the bit-stream library that is to execute the predicted next job requested to be accelerated, determining whether the predicted bit-stream is already registered on an accelerator, determining, in response to a determination that the predicted bit-stream is not registered on an accelerator, an accelerator that satisfies characteristics of the predicted bit-stream, and registering, in response to a determination of the accelerator that is to execute the predicted next job, the predicted bit-stream on the determined accelerator.

As shown in FIG. 17, the illustrative orchestrator server 1602 includes a compute engine 1702, an input/output (I/O) subsystem 1708, communication circuitry 1710, and one or more data storage devices 1714. Of course, in other embodiments, the orchestrator server 1602 may include other or additional components, such as those commonly found in a computer (e.g., display, peripheral devices, etc.). Additionally, in some embodiments, one or more of the illustrative components may be incorporated in, or otherwise form a portion of, another component.

The compute engine 1702 may be embodied as any type of device or collection of devices capable of performing various compute functions described below. In some embodiments, the compute engine 1702 may be embodied as a single device such as an integrated circuit, an embedded system, a FPGA, a system-on-a-chip (SOC), or other integrated system or device. Additionally, in some embodiments, the compute engine 1702 includes or is embodied as a processor 1704 and a memory 1706. The processor 1704 may be embodied as any type of processor capable of performing the functions described herein. For example, the processor 1704 may be embodied as a single or multi-core processor(s), a microcontroller, or other processor or processing/controlling circuit. In some embodiments, the processor 1704 may be embodied as, include, or be coupled to an FPGA, an ASIC, reconfigurable hardware or hardware circuitry, or other specialized hardware to facilitate performance of the functions described herein.

The memory 1706 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

In one embodiment, the memory device is a block addressable memory device, such as those based on NAND or NOR technologies. A memory device may also include future generation nonvolatile devices, such as a three dimensional crosspoint memory device (e.g., Intel 3D XPoint^{™} memory), or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product.

In some embodiments, 3D crosspoint architecture (e.g., Intel 3D XPoint^{™} memory) may comprise a transistor-less stackable cross point architecture in which memory cells sit at the intersection of word lines and bit lines and are individually addressable and in which bit storage is based on a change in bulk resistance. In some embodiments, all or a portion of the memory 1706 may be integrated into the processor 1704. In operation, the memory 1706 may store various software and data used during operation.

The compute engine 1702 is communicatively coupled with other components of the orchestrator server 1602 via the I/O subsystem 1708, which may be embodied as circuitry and/or components to facilitate input/output operations with the compute engine 1702 (e.g., with the processor 1704 and/or the memory 1706) and other components of the orchestrator server 1602. For example, the I/O subsystem 1708 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 1708 may form a portion of a system-on-a-chip (SoC) and be incorporated, along with one or more of the processor 1704, the memory 1706, and other components of the orchestrator server 1602, into the compute engine 1702.

The communication circuitry 1710 may be embodied as any communication circuit, device, or collection thereof, capable of enabling communications over the network between the orchestrator server 1602 and another compute device (e.g., the compute sleds 1604, the accelerator sled 1608, etc.). The communication circuitry 1710 may be configured to use any one or more communication technology (e.g., wired or wireless communications) and associated protocols (e.g., Ethernet, Bluetooth^{®}, Wi-Fi^{®}, WiMAX, etc.) to effect such communication.

The illustrative communication circuitry 1710 includes a network interface controller (NIC) 1712, which may also be referred to as a host fabric interface (HFI). The NIC 1712 may be embodied as one or more add-in-boards, daughter cards, network interface cards, controller chips, chipsets, or other devices that may be used by the orchestrator server 1602 to connect with another compute device (e.g., the compute sleds 1604, the accelerator sleds 1608, etc.). In some embodiments, the NIC 1712 may be embodied as part of a system-on-a-chip (SoC) that includes one or more processors, or included on a multichip package that also contains one or more processors. In some embodiments, the NIC 1712 may include a local processor (not shown) and/or a local memory (not shown) that are both local to the NIC 1712. In such embodiments, the local processor of the NIC 1712 may be capable of performing one or more of the functions of the compute engine 1702 described herein. Additionally or alternatively, in such embodiments, the local memory of the NIC 1712 may be integrated into one or more components of the orchestrator server 1602 at the board level, socket level, chip level, and/or other levels.

The one or more illustrative data storage devices 1714 may be embodied as any type of devices configured for short-term or long-term storage of data such as, for example, memory devices and circuits, memory cards, hard disk drives (HDDs), solid-state drives (SSDs), or other data storage devices. Each data storage device 1714 may include a system partition that stores data and firmware code for the data storage device 1714. Each data storage device 1714 may also include an operating system partition that stores data files and executables for an operating system. Additionally or alternatively, the orchestrator server 1602 may include one or more peripheral devices (not shown). Such peripheral devices may include any type of peripheral device commonly found in a compute device such as a display, speakers, a mouse, a keyboard, and/or other input/output devices, interface devices, and/or other peripheral devices.

The compute sleds 1604 and the accelerator sleds 1608 may have components similar to those described in FIG. 17. The description of those components of the orchestrator server 1602 is equally applicable to the description of components of those devices and is not repeated herein for clarity of the description. Further, it should be appreciated that any of the compute sleds 1604 and the accelerator sled 1608 may include other components (e.g., the accelerators 1670) and/or other components, sub-components, and devices commonly found in a computing device, which are not discussed above in reference to the orchestrator server 1602 and not discussed herein for clarity of the description.

As described above, the orchestrator server 1602 and the sleds 1604, 1608 are illustratively in communication via a network (not shown), which may be embodied as any type of wired or wireless communication network, including global networks (e.g., the Internet), local area networks (LANs) or wide area networks (WANs), cellular networks (e.g., Global System for Mobile Communications (GSM), 3G, Long Term Evolution (LTE), Worldwide Interoperability for Microwave Access (WiMAX), etc.), digital subscriber line (DSL) networks, cable networks (e.g., coaxial networks, fiber networks, etc.), or any combination thereof.

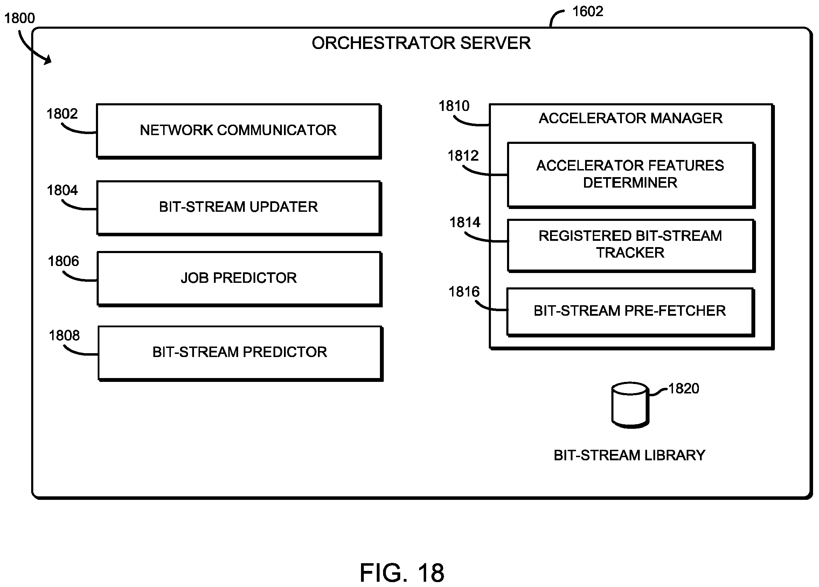

Referring now to FIG. 18, in the illustrative embodiment, the orchestrator server 1602 may establish an environment 1800 during operation. In the illustrative embodiment, the environment 1800 includes the bit-stream library 1620, which may be embodied as any data indicative of the previously and currently registered bit-streams 1622 on the accelerators 1670 of the accelerator pool 1606. Additionally, the illustrative environment 1800 includes a network communicator 1802, a bit-stream updater 1804, a job predictor 1806, a bit-stream predictor 1808, and an accelerator manager 1810. As shown in FIG. 18, the accelerator manager 1810 further includes an accelerator features determiner 1812, a registered bit-stream tracker 1814, and a bit-stream pre-fetcher 1816. Each of the components of the environment 1800 may be embodied as hardware, firmware, software, or a combination thereof. As such, in some embodiments, one or more of the components of the environment 1800 may be embodied as circuitry or a collection of electrical devices (e.g., network communicator circuitry 1802, bit-stream updater circuitry 1804, job predictor circuitry 1806, bit-stream predictor circuitry 1808, accelerator manager circuitry 1810, accelerator features determiner circuitry 1812, registered bit-stream tracker circuitry 1814, bit-stream pre-fetcher circuitry 1816, etc.).

In the illustrative environment 1800, the network communicator 1802 is configured to facilitate inbound and outbound network communications (e.g., network traffic, network packets, network flows, etc.) to and from the orchestrator server 1602, respectively. To do so, the network communicator 1802 is configured to receive and process data from a remote system or computing device (e.g., the compute sleds 1604, accelerator sleds 1608 of the accelerator pool 1606, etc.) and to prepare and send data to a remote system or computing device (e.g., the compute sleds 1604, accelerator sleds 1608 of the accelerator pool 1606, etc.). Accordingly, in some embodiments, at least a portion of the functionality of the network communicator 1802 may be performed by a communication circuitry of the orchestrator server 1602.

The bit-stream updater 1804, which may be embodied as hardware, firmware, software, virtualized hardware, emulated architecture, and/or a combination thereof as discussed above, is configured to update the bit-stream library 1620 to keep track of which bit-stream 1622 is presently registered on which accelerator 1670. As discussed above, the bit-stream library 1620 stores the bit-streams 1622 that are presently registered on the accelerators 1670 of the accelerator pool 1606. To do so, the bit-stream updater 1804 may receive bit-stream registration data from the bit-stream cache 1662 of each accelerator sled 1608 that indicates which bit-streams 1622 are presently registered on each accelerator 1670 of the corresponding accelerator sled 1608 and update the bit-stream library 1620 accordingly. In some embodiments, the bit-stream updater 1804 may update the timestamp of a bit-stream 1622 in the bit-stream library 1620 indicating the time of the bit-stream registration after registering the bit-stream 1622 on an accelerator 1670. Alternatively, in some embodiments, the bit-stream cache 1662 of each accelerator sled 1608 may update the timestamp of a bit-stream registration and execution on one of the accelerators 1670 of the corresponding accelerator sled 1608 and transmit updated timestamp data to the bit-stream updater 1804 to update the bit-stream library 1620. It should be appreciated that the timestamp of each bit-stream 1622 may be used to determine an execution pattern of each bit-stream 1622 for each available application 1642. In some embodiments, the bit-stream cache 1662 may temporarily store a copy of one or more bit-streams that have been received from the bit-stream library 1620.

The job predictor 1806, which may be embodied as hardware, firmware, software, virtualized hardware, emulated architecture, and/or a combination thereof as discussed above, is configured to predict a next job to be requested from an available application 1642 of a compute sled 1604 for acceleration. To do so, the job predictor 1806 may predict the next job based on available applications 1642 that are presently being executed on the compute sleds 1604. For example, types and sizes of available applications 1642 may infer types of jobs that are likely to be requested for acceleration by the available applications 1642. Additionally or alternatively, the job predictor 1806 may predict a next job to be requested based on an execution pattern of bit-streams 1622 for each available application 1642. To do so, in some embodiments, the job predictor 1806 may determine past execution history of each bit-stream 1622 for each application 1642. For example, the job predictor 1806 may analyze the timestamps of each bit-stream 1622 to determine a number of times that the corresponding bit-stream 1622 was used to execute a job requested by each available application 1642. In other embodiments, the job predictor 1806 may predict an execution pattern of each bit-stream 1622 for each application 1642 with machine learning.

The bit-stream predictor 1808, which may be embodied as hardware, firmware, software, virtualized hardware, emulated architecture, and/or a combination thereof as discussed above, is configured to predict a bit-stream 1622 from the bit-stream library 1620 for executing a next job predicted to be requested for acceleration. To do so, the bit-stream predictor 1808 may predict a bit-stream 1622 based on the available accelerators 1670 of the system 1600 because each available accelerator 1670 may have different capabilities, making them differently suited to execute a given type of job. For example, an accelerator 1670 may be capable of executing a job that requires encryption/decryption, compression/decompression, transcoding, matrix multiplication, and/or convolution neural network operations. Additionally or alternatively, in some embodiments, the bit-stream predictor 1808 may predict a bit-stream 1622 for executing a next predicted job based on a type of predicted next job and types of workloads that each accelerator 1670 is capable of accelerating. In other embodiments, the bit-stream predictor 1808 may predict a bit-stream 1622 based on an execution pattern of bit-streams for each available application 1642. For example, the bit-stream predictor 1808 may analyze the timestamps of each bit-stream 1622 to determine a number of times that the corresponding bit-stream 1622 was used to execute a job requested by each available application 1642 to determine the execution pattern.

The accelerator manager 1810, which may be embodied as hardware, firmware, software, virtualized hardware, emulated architecture, and/or a combination thereof as discussed above, is configured to manage bit-stream registrations on each accelerator 1670 of the accelerator pool 1606. In the illustrative embodiment, the accelerator manager 1810 determines whether the predicted bit-stream 1622 is already registered on one of the accelerators 1670 based on the bit-stream library 1620 and, in response to determining that the predicted bit-stream 1622 is not registered on one of the accelerators 1670, the accelerator manager 1810 determines an accelerator 1670 capable of executing the predicted bit-stream 1622 and pre-registers the predicted bit-stream 1622 on the determined accelerator 1670. To do so, the accelerator manager 1810 further includes the accelerator features determiner 1812, the registered bit-stream tracker 1814, and the bit-stream pre-fetcher 1816.

The accelerator features determiner 1812, which may be embodied as hardware, firmware, software, virtualized hardware, emulated architecture, and/or a combination thereof as discussed above, is configured to determine features of each accelerator 1670. For example, in some embodiments, the accelerator features determiner 1812 may determine an availability of each accelerator 1670. To do so, the accelerator features determiner 1812 may determine a present load on each accelerator 1670. In some embodiments where the accelerator 1670 is embodied as a field programmable gate array (FPGA), the accelerator features determiner 1812 may further determine a number of free slots in each FPGA and/or a number of free logic gates in each FPGA. Additionally or alternatively, the accelerator features determiner 1812 may determine types of workloads that each accelerator 1670 is capable of accelerating. For example, the accelerator features determiner 1812 may determine whether each accelerator is capable of executing a job that requires encryption/decryption, compression/decompression, transcoding, matrix multiplication, and/or convolution neural network operations. Additionally, in some embodiments, the accelerator features determiner 1812 may determine a physical distance from a compute sled 1604 that is requesting a job to be accelerated to each accelerator 1670. It should be appreciated that the physical distance between the requesting compute sled 1604 and the accelerator 1670 may affect communication efficiency.

The registered bit-stream tracker 1814, which may be embodied as hardware, firmware, software, virtualized hardware, emulated architecture, and/or a combination thereof as discussed above, is configured to track bit-streams 1622 that are presently registered on the accelerators 1670. The registered bit-stream tracker 1814 may determine the bit-streams 1622 registered on the accelerators 1670 of each accelerator sled 1608 and store the bit-streams registration data in the bit-stream cache 1662. As discussed above, the bit-stream cache 1662 may transmit the bit-streams registration data to the orchestrator server 1602, such that the registered bit-stream tracker 1814 may monitor which bit-stream 1622 is registered on which accelerator 1670 to execute a job from an application 1642 in order to analyze execution patterns of bit-streams 1622 for the corresponding application 1642.

The bit-stream pre-fetcher 1816, which may be embodied as hardware, firmware, software, virtualized hardware, emulated architecture, and/or a combination thereof as discussed above, is configured to pre-fetch the predicted bit-streams 1622 that are likely to execute the predicted next job on an accelerator 1670 that is capable of executing the predicted bit-stream 1622. By pre-fetching and registering the predicted bit-stream 1622 on the accelerator 1670, the accelerator 1670 becomes pre-configured to execute the next job before a corresponding job request is received from the application 1642 of the compute sled 1604. As discussed above, by managing future bit-stream registration and pre-configuring the accelerators 1670, the illustrative system 1600 may reduce the overall execution time, including the time taken to determine an accelerator 1670 that satisfies the bit-stream requirements and register the bit-stream 1622 on the accelerator 1670.

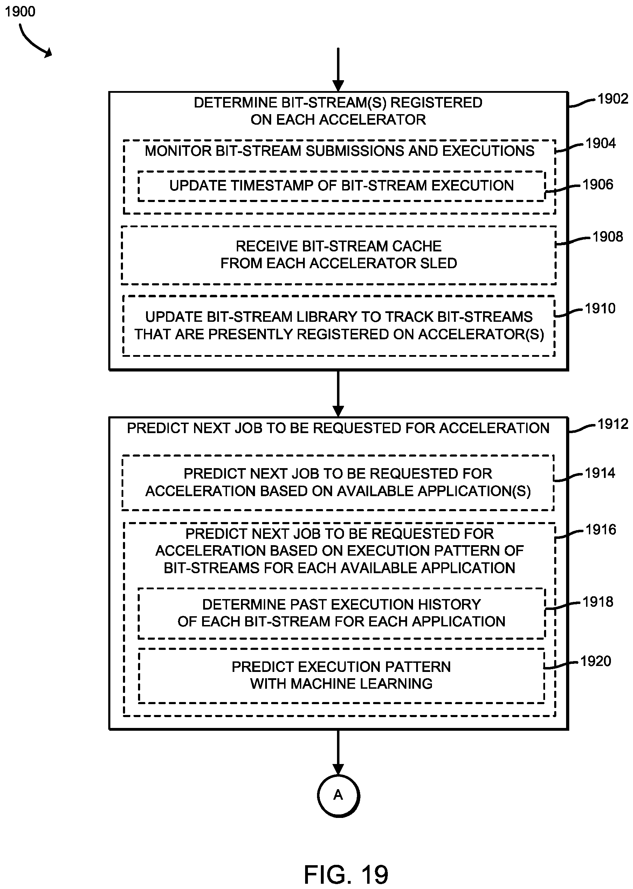

Referring now to FIGS. 19-21, in use, the orchestrator server 1602 may execute a method 1900 for predicting a bit-stream 1622 to be registered on an accelerator 1670 based on a predicted next job to be accelerated and pre-configuring an accelerator by registering the predicted bit-stream 1622 prior to receiving the next job. The method 1900 begins with block 1902, in which the orchestrator server 1602 determines one or more bit-streams registered on each accelerator 1670. To do so, in some embodiments, the orchestrator server 1602 may monitor bit-stream submissions and executions on each accelerator 1670 in block 1904 and may update a timestamp of each bit-stream execution in block 1906, which may be later analyzed to determine an execution pattern of each bit-stream for each application. In other embodiments, the orchestrator server 1602 may receive bit-stream registration data from the bit-stream cache 1662 of each accelerator sled 1608 in block 1908. As discussed above, the bit-stream registration data indicates the bit-streams 1622 that are presently registered on each of the accelerators 1670 on the corresponding accelerator sled 1608. Subsequently in block 1910, the orchestrator server 1602 may update the bit-stream library 1620 to keep track of which bit-stream 1622 is presently registered on which accelerator 1670. As discussed above, the bit-stream library 1620 includes the bit-streams 1622 that are presently registered on the accelerators 1670.

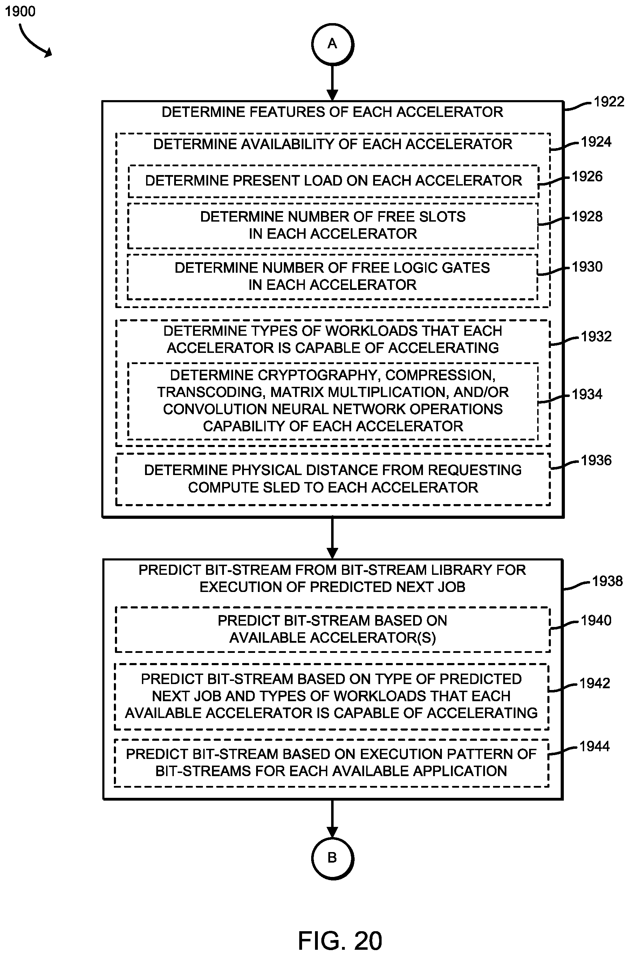

In block 1912, the orchestrator server 1602 predicts a next job to be requested for acceleration. The acceleration request is received from one of the applications 1642 that is presently being executed on one of the compute sleds 1604. In some embodiments, the orchestrator server 1602 may predict a next job to be accelerated based on the available applications 1642 executing on the compute sleds 1604 in block 1914. For example, based on the types of the available applications 1642, the orchestrator server 1602 may predict a type of data or job that is likely to be requested for acceleration. Additionally or alternatively, the orchestrator server 1602 may predict a next job to be accelerated based on an execution pattern of bit-streams 1622 for each available application 1642 in block 1916. To do so, the orchestrator server 1602 may determine a past execution history of each bit-stream 1622 for each application 1642, as indicated in block 1918, and/or may predict an execution pattern with machine learning as indicated in block 1920. Subsequent to determining the predicted next job to be accelerated, the method 1900 advances to block 1922 shown in FIG. 20.

Referring now to FIG. 20, in block 1922, the orchestrator server 1602 determines features of each accelerator 1670. To do so, the orchestrator server 1602 may determine the availability of each accelerator 1670 of the accelerator pool 1606, as indicated in block 1924. For example, in block 1926, the orchestrator server 1602 may determine the present load on each accelerator 1670 to determine the availability of each accelerator 1670. As discussed above, in some embodiments, the accelerator 1670 may be embodied as a field programmable gate array (FPGA). In such embodiments, the orchestrator server 1602 may determine a number of free slots in each FPGA in block 1928 and/or a number of free logic gates in each FPGA in block 1930 to determine the availability of each FPGA.

Additionally or alternatively, in some embodiments, the orchestrator server 1602 may determine types of workloads that each accelerator 1670 is capable of accelerating, as indicated in block 1932. For example, in block 1934, the orchestrator server 1602 may determine a cryptography, compression, transcoding, matrix multiplication, and/or convolution neural network operations capability of each accelerator 1670. In other embodiments, the orchestrator server 1602 may further determine a physical distance from the requesting compute sled 1604 to each accelerator 1670. As discussed above, the physical distance between the requesting compute sled 1604 and the accelerator 1670 may affect communication efficiency.

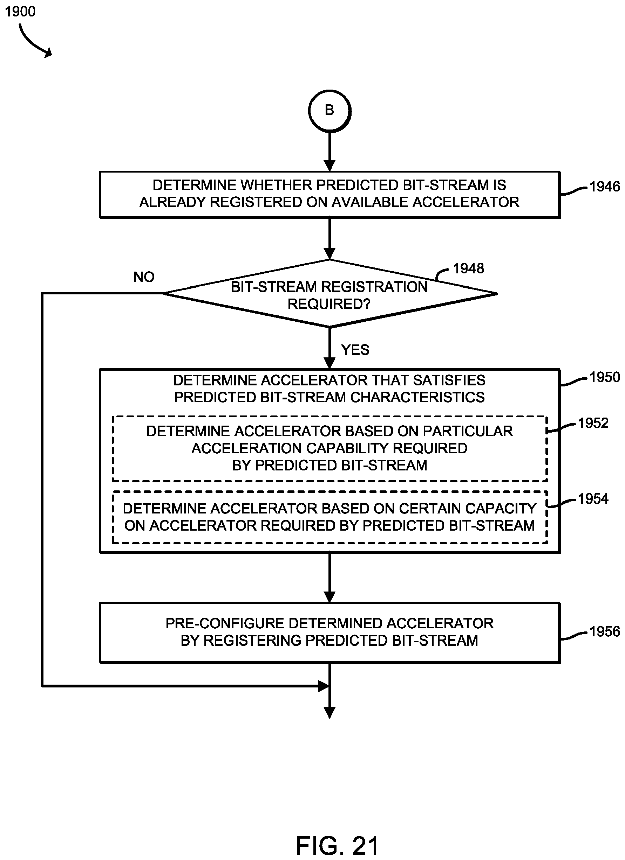

In block 1938, the orchestrator server 1602 predicts a bit-stream 1622 from the bit-stream library 1620 for execution of the predicted next job. To do so, in block 1940, the orchestrator server 1602 may predict a bit-stream 1622 based on the available accelerator(s) 1670. Additionally or alternatively, the orchestrator server 1602 may predict a bit-stream 1622 based on the type of the predicted next job to be accelerated and types of workloads that each accelerator 1670 is capable of accelerating, as indicated in block 1942. As discussed above, each accelerator 1670 may have different features that allow the accelerator 1670 to execute certain types of data. As such, based on the type of the predicted next job, the orchestrator server 1602 may determine the features of an accelerator 1670 that are required to execute the type of the predicted next job. Additionally or alternatively, in block 1944, the orchestrator server 1602 may predict a bit-stream 1622 based on the execution patterns of bit-streams 1622 for each available application 1642 to determine which bit-stream 1622 is likely to be needed to execute the predicted next job. For example, as discussed above, the orchestrator server 1602 may analyze the execution pattern based on the past execution history of each bit-stream 1622 for each application 1642 and/or the execution pattern predicted with machine learning. Subsequent to determining the predicted bit-stream for execution of the predicted next job, the method 1900 advances to block 1946 shown in FIG. 21.

Referring now to FIG. 21, in block 1946, the orchestrator server 1602 may determine whether the predicted bit-stream 1622 is already registered on one of the available accelerators 1670 of the accelerator pool 1606. If the orchestrator server 1602 determines, in block 1948, that the predicted bit-stream 1622 is already registered on one of the available accelerators 1670, the orchestrator server 1602 determines that a registration of the predicted bit-stream 1622 is not required and the method 1900 skips to the end. If, however, the orchestrator server 1602 determines, in block 1948, that the predicted bit-stream 1622 is not registered on one of the available accelerators 1670 and requires to be registered, the method 1900 advances to block 1950.

In block 1950, the orchestrator server 1602 determines an accelerator 1670 that satisfies the predicted bit-stream characteristics. To do so, in block 1952, the orchestrator server 1602 may determine an accelerator 1670 based on a particular acceleration capability required by the predicted bit-stream 1622. Additionally or alternatively, the orchestrator server 1602 may determine an accelerator 1670 based on a certain capacity on an accelerator 1670 required by the predicted bit-stream 1622, as indicated in block 1954. Subsequent to determining the accelerator 1670, the method 1900 advances to block 1956, in which the orchestrator server 1602 pre-configures the determined accelerator 1670 by registering the predicted bit-stream 1622 on the determined accelerator 1670. In other words, the predicted bit-stream 1622 is pre-fetched from the bit-stream library 1620 and registered on the determined accelerator 1670 prior to receiving the predicted next job. By dynamically registering the predicted bit-stream 1622 prior to receiving the predicted next job, the system 1600 may reduce likelihood of incurring latency for fetching and registering the bit-stream after receiving the next job to be accelerated.

### EXAMPLES

Illustrative examples of the technologies disclosed herein are provided below. An embodiment of the technologies may include any one or more, and any combination of, the examples described below.

Example 1 includes a compute device for pre-configuring an accelerator of a plurality of accelerators of a system, the compute device comprising communication circuitry; a compute engine to (i) determine one or more bit-streams registered on each accelerator of a plurality of accelerators, (ii) predict a next job to be requested for acceleration from an application of at least one compute sled of a plurality of compute sleds, (iii) predict a bit-stream from a bit-stream library that is to execute the predicted next job requested to be accelerated, (iv) determine whether the predicted bit-stream is already registered on one of the accelerators, (v) select, in response to a determination that the predicted bit-stream is not registered on one of the accelerators, an accelerator from the plurality of accelerators that satisfies characteristics of the predicted bit-stream, and (vi) register, in response to a determination of the accelerator that satisfies characteristics of the predicted bit-stream, the predicted bit-stream on the determined accelerator.

Example 2 includes the subject matter of Example 1, and wherein to determine the one or more bit-streams registered on each accelerator comprises to monitor bit-stream submissions and executions on each accelerator.

Example 3 includes the subject matter of any of Examples 1 and 2, and wherein to determine the one or more bit-streams registered on each accelerator comprises to receive bit-stream registration data from each accelerator, wherein the bit-stream registration data indicates the bit-streams presently registered on the corresponding accelerator.

Example 4 includes the subject matter of any of Examples 1-3, and wherein to determine the one or more bit-streams registered on each accelerator comprises to update the bit-stream library to track the bit-streams that are presently registered on each accelerator.

Example 5 includes the subject matter of any of Examples 1-4, and wherein to predict the next job to be requested for acceleration comprises to predict the next job to be requested for acceleration based on available applications that are presently being executed on the plurality of the compute sleds.

Example 6 includes the subject matter of any of Examples 1-5, and wherein to predict the next job to be requested for acceleration comprises to predict a next job to be requested for acceleration based on an execution pattern of bit-streams for each available application that is presently being executed on the plurality of the compute sleds.

Example 7 includes the subject matter of any of Examples 1-6, and wherein to predict the next job to be requested for acceleration based on an execution pattern of bit-streams for each available application comprises to determine a past execution history of each bit-stream for each available application.

Example 8 includes the subject matter of any of Examples 1-7, and wherein to predict the next job to be requested for acceleration based on an execution pattern of bit-streams for each available application comprises to predict an execution pattern with machine learning.

Example 9 includes the subject matter of any of Examples 1-8, and wherein to predict the bit-stream from the bit-stream library comprises to predict a bit-stream based on available accelerators of the system.

Example 10 includes the subject matter of any of Examples 1-9, and wherein to predict the bit-stream from the bit-stream library comprises to predict a bit-stream based on a type of predicted next job and types of workloads that each accelerator is capable of accelerating.

Example 11 includes the subject matter of any of Examples 1-10, and wherein to predict the bit-stream from the bit-stream library comprises to predict an execution pattern of bit-streams for each available application.

Example 12 includes the subject matter of any of Examples 1-11, and wherein to select the accelerator that satisfies characteristics of the predicted bit-stream comprises to determine an accelerator based on a particular accelerator capability required by the predicted bit-stream.

Example 13 includes the subject matter of any of Examples 1-12, and wherein to select the accelerator that satisfies characteristics of the predicted bit-stream comprises to determine an accelerator based on a capacity on an accelerator required by the predicted bit-stream.

Example 14 includes the subject matter of any of Examples 1-13, and wherein the compute engine is further to determine features of each accelerator of the plurality of accelerators of the system.

Example 15 includes the subject matter of any of Examples 1-14, and wherein to determine features of each accelerator of the system comprises to determine the availability of each accelerator.

Example 16 includes the subject matter of any of Examples 1-15, and wherein to determine the availability of each accelerator comprises to determine a present load on each accelerator.

Example 17 includes the subject matter of any of Examples 1-16, and wherein to determine the availability of each accelerator comprises to determine a number of free slots in each accelerator.

Example 18 includes the subject matter of any of Examples 1-17, and wherein to determine the availability of each accelerator comprises to determine a number of free logic gates in each accelerator.

Example 19 includes the subject matter of any of Examples 1-18, and wherein to determine features of each accelerator of the system comprises to determine types of workloads that each accelerator is capable of accelerating.

Example 20 includes the subject matter of any of Examples 1-19, and wherein to determine types of workloads that each accelerator is capable of accelerating comprises to determine cryptography, compression, transcoding, matrix multiplication, and/or convolution neural network operations capabilities of each accelerator.

Example 21 includes the subject matter of any of Examples 1-20, and wherein to determine features of each accelerator of the system comprises to determine a physical distance from the requesting compute sled to each accelerator.

Example 22 includes the subject matter of any of Examples 1-21, and wherein to select the accelerator that satisfies characteristics of the predicted bit-stream comprises to determine an accelerator based on the features of each accelerator.

Example 23 includes a method for pre-configuring an accelerator of a plurality of accelerators of a system, the method comprising determining, by an orchestrator server, one or more bit-streams registered on each accelerator of a plurality of accelerators; predicting, by the orchestrator server, a next job to be requested for acceleration from an application of at least one compute sled of a plurality of compute sleds; predicting, by the orchestrator server, a bit-stream from a bit-stream library that is to execute the predicted next job requested to be accelerated; determining, by the orchestrator server, whether the predicted bit-stream is already registered on one of the accelerators; selecting, by the orchestrator server and in response to a determination that the predicted bit-stream is not registered on one of the accelerators, an accelerator from the plurality of accelerators that satisfies characteristics of the predicted bit-stream; and registering, by the orchestrator server and in response to a determination of the accelerator that satisfies characteristics of the predicted bit-stream, the predicted bit-stream on the determined accelerator.

Example 24 includes the subject matter of Example 23, and wherein determining the one or more bit-streams registered on each accelerator comprises monitoring, by the orchestrator server, bit-stream submissions and executions on each accelerator.

Example 25 includes the subject matter of any of Examples 23 and 24, and wherein determining the one or more bit-streams registered on each accelerator comprises receiving, by the orchestrator server, bit-stream registration data from each accelerator, wherein the bit-stream registration data indicates the bit-streams presently registered on the corresponding accelerator.

Example 26 includes the subject matter of any of Examples 23-25, and wherein determining the one or more bit-streams registered on each accelerator comprises updating, by the orchestrator server, the bit-stream library to track the bit-streams that are presently registered on each accelerator.

Example 27 includes the subject matter of any of Examples 23-26, and wherein predicting the next job to be requested for acceleration comprises predicting, by the orchestrator server, the next job to be requested for acceleration based on available applications that are presently being executed on the plurality of the compute sleds.

Example 28 includes the subject matter of any of Examples 23-27, and wherein predicting the next job to be requested for acceleration comprises predicting, by the orchestrator server, a next job to be requested for acceleration based on an execution pattern of bit-streams for each available application that is presently being executed on the plurality of the compute sleds.

Example 29 includes the subject matter of any of Examples 23-28, and wherein predicting the next job to be requested for acceleration based on an execution pattern of bit-streams for each available application comprises determining, by the orchestrator server, a past execution history of each bit-stream for each available application.

Example 30 includes the subject matter of any of Examples 23-29, and wherein predicting the next job to be requested for acceleration based on an execution pattern of bit-streams for each available application comprises predicting, by the orchestrator server, an execution pattern with machine learning.

Example 31 includes the subject matter of any of Examples 23-30, and wherein predicting the bit-stream from the bit-stream library comprises predicting, by the orchestrator server, a bit-stream based on available accelerators of the system.

Example 32 includes the subject matter of any of Examples 23-31, and wherein predicting the bit-stream from the bit-stream library comprises predicting, by the orchestrator server, a bit-stream based on a type of predicted next job and types of workloads that each accelerator is capable of accelerating.

Example 33 includes the subject matter of any of Examples 23-32, and wherein predicting the bit-stream from the bit-stream library comprises predicting, by the orchestrator server, an execution pattern of bit-streams for each available application.

Example 34 includes the subject matter of any of Examples 23-33, and wherein selecting the accelerator that satisfies characteristics of the predicted bit-stream comprises determining, by the orchestrator server, an accelerator based on a particular accelerator capability required by the predicted bit-stream.

Example 35 includes the subject matter of any of Examples 23-34, and wherein selecting the accelerator that satisfies characteristics of the predicted bit-stream comprises determining, by the orchestrator server, an accelerator based on a capacity on an accelerator required by the predicted bit-stream.

Example 36 includes the subject matter of any of Examples 23-35, and further including determining, by the orchestrator server, features of each accelerator of the plurality of accelerators of the system.

Example 37 includes the subject matter of any of Examples 23-36, and wherein determining features of each accelerator of the system comprises determining, by the orchestrator server, the availability of each accelerator.

Example 38 includes the subject matter of any of Examples 23-37, and wherein determining the availability of each accelerator comprises determining, by the orchestrator server, a present load on each accelerator.

Example 39 includes the subject matter of any of Examples 23-38, and wherein determining availability of each accelerator comprises determining, by the orchestrator server, a number of free slots in each accelerator.

Example 40 includes the subject matter of any of Examples 23-39, and wherein determining availability of each accelerator comprises determining, by the orchestrator server, a number of free logic gates in each accelerator.

Example 41 includes the subject matter of any of Examples 23-40, and wherein determining features of each accelerator of the system comprises determining, by the orchestrator server, types of workloads that each accelerator is capable of accelerating.

Example 42 includes the subject matter of any of Examples 23-41, and wherein determining types of workloads that each accelerator is capable of accelerating comprises determining, by the orchestrator server, cryptography, compression, transcoding, matrix multiplication, and/or convolution neural network operations capabilities of each accelerator.

Example 43 includes the subject matter of any of Examples 23-42, and wherein determining features of each accelerator of the system comprises determining, by the orchestrator server, a physical distance from the requesting compute sled to each accelerator.

Example 44 includes the subject matter of any of Examples 23-43, and wherein selecting the accelerator that satisfies characteristics of the predicted bit-stream comprises determining, by the orchestrator server, an accelerator based on the features of each accelerator.

Example 45 includes one or more machine-readable storage media comprising a plurality of instructions stored thereon that, in response to being executed, cause a compute device to perform the method of any of Examples 23-44.

Example 46 includes a compute device comprising means for performing the method of any of Examples 23-44.

Example 47 includes a compute device for pre-configuring an accelerator of a plurality of accelerators of a system, the compute device comprising bit-stream updater circuitry to determine one or more bit-streams registered on each accelerator of a plurality of accelerators; job predictor circuitry to predict a next job to be requested for acceleration from an application of at least one compute sled of a plurality of compute sleds; bit-stream predictor circuitry to predict a bit-stream from a bit-stream library that is to execute the predicted next job requested to be accelerated; and accelerator manager circuitry to (i) determine whether the predicted bit-stream is already registered on one of the accelerators, (ii) select, in response to a determination that the predicted bit-stream is not registered on one of the accelerators, an accelerator from the plurality of accelerators that satisfies characteristics of the predicted bit-stream, and (iii) register, in response to a determination of the accelerator that satisfies characteristics of the predicted bit-stream, the predicted bit-stream on the determined accelerator.

Example 48 includes the subject matter of Example 47, and wherein to determine the one or more bit-streams registered on each accelerator comprises to monitor bit-stream submissions and executions on each accelerator.

Example 49 includes the subject matter of any of Examples 47 and 48, and wherein to determine the one or more bit-streams registered on each accelerator comprises to receive bit-stream registration data from each accelerator, wherein the bit-stream registration data indicates the bit-streams presently registered on the corresponding accelerator.

Example 50 includes the subject matter of any of Examples 47-49, and wherein to determine the one or more bit-streams registered on each accelerator comprises to update the bit-stream library to track the bit-streams that are presently registered on each accelerator.

Example 51 includes the subject matter of any of Examples 47-50, and wherein to predict the next job to be requested for acceleration comprises to predict the next job to be requested for acceleration based on available applications that are presently being executed on the plurality of the compute sleds.

Example 52 includes the subject matter of any of Examples 47-51, and wherein to predict the next job to be requested for acceleration comprises to predict a next job to be requested for acceleration based on an execution pattern of bit-streams for each available application that is presently being executed on the plurality of the compute sleds.

Example 53 includes the subject matter of any of Examples 47-52, and wherein to predict the next job to be requested for acceleration based on an execution pattern of bit-streams for each available application comprises to determine a past execution history of each bit-stream for each available application.

Example 54 includes the subject matter of any of Examples 47-53, and wherein to predict the next job to be requested for acceleration based on an execution pattern of bit-streams for each available application comprises to predict an execution pattern with machine learning.

Example 55 includes the subject matter of any of Examples 47-54, and wherein to predict the bit-stream from the bit-stream library comprises to predict a bit-stream based on available accelerators of the system.

Example 56 includes the subject matter of any of Examples 47-55, and wherein to predict the bit-stream from the bit-stream library comprises to predict a bit-stream based on a type of predicted next job and types of workloads that each accelerator is capable of accelerating.

Example 57 includes the subject matter of any of Examples 47-56, and wherein to predict the bit-stream from the bit-stream library comprises to predict an execution pattern of bit-streams for each available application.

Example 58 includes the subject matter of any of Examples 47-57, and wherein to select the accelerator that satisfies characteristics of the predicted bit-stream comprises to determine an accelerator based on a particular accelerator capability required by the predicted bit-stream.

Example 59 includes the subject matter of any of Examples 47-58, and wherein to select the accelerator that satisfies characteristics of the predicted bit-stream comprises to determine an accelerator based on a capacity on an accelerator required by the predicted bit-stream.

Example 60 includes the subject matter of any of Examples 47-59, and wherein the compute engine is further to determine features of each accelerator of the plurality of accelerators of the system.

Example 61 includes the subject matter of any of Examples 47-60, and wherein to determine features of each accelerator of the system comprises to determine the availability of each accelerator.

Example 62 includes the subject matter of any of Examples 47-61, and wherein to determine the availability of each accelerator comprises to determine a present load on each accelerator.

Example 63 includes the subject matter of any of Examples 47-62, and wherein to determine the availability of each accelerator comprises to determine a number of free slots in each accelerator.

Example 64 includes the subject matter of any of Examples 47-63, and wherein to determine the availability of each accelerator comprises to determine a number of free logic gates in each accelerator.

Example 65 includes the subject matter of any of Examples 47-64, and wherein to determine features of each accelerator of the system comprises to determine types of workloads that each accelerator is capable of accelerating.

Example 66 includes the subject matter of any of Examples 47-65, and wherein to determine types of workloads that each accelerator is capable of accelerating comprises to determine cryptography, compression, transcoding, matrix multiplication, and/or convolution neural network operations capabilities of each accelerator.

Example 67 includes the subject matter of any of Examples 47-66, and wherein to determine features of each accelerator of the system comprises to determine a physical distance from the requesting compute sled to each accelerator.

Example 68 includes the subject matter of any of Examples 47-67, and wherein to select the accelerator that satisfies characteristics of the predicted bit-stream comprises to determine an accelerator based on the features of each accelerator.

Example 69 includes a compute device for pre-configuring an accelerator of a plurality of accelerators of a system, the compute device comprising circuitry for determining one or more bit-streams registered on each accelerator of a plurality of accelerators; means for predicting a next job to be requested for acceleration from an application of at least one compute sled of a plurality of compute sleds; means for predicting a bit-stream from a bit-stream library that is to execute the predicted next job requested to be accelerated; means for determining whether the predicted bit-stream is already registered on one of the accelerators; means for selecting, in response to a determination that the predicted bit-stream is not registered on one of the accelerators, an accelerator from the plurality of accelerators that satisfies characteristics of the predicted bit-stream; and means for registering, in response to a determination of the accelerator that satisfies characteristics of the predicted bit-stream, the predicted bit-stream on the determined accelerator.

Example 70 includes the subject matter of Example 69, and wherein the circuitry for determining the one or more bit-streams registered on each accelerator comprises circuitry for monitoring bit-stream submissions and executions on each accelerator.

Example 71 includes the subject matter of any of Examples 69 and 70, and wherein the means for determining the one or more bit-streams registered on each accelerator comprises means for receiving bit-stream registration data from each accelerator, wherein the bit-stream registration data indicates the bit-streams presently registered on the corresponding accelerator.

Example 72 includes the subject matter of any of Examples 69-71, and wherein the means for determining the one or more bit-streams registered on each accelerator comprises means for updating the bit-stream library to track the bit-streams that are presently registered on each accelerator.

Example 73 includes the subject matter of any of Examples 69-72, and wherein the means for predicting the next job to be requested for acceleration comprises means for predicting the next job to be requested for acceleration based on available applications that are presently being executed on the plurality of the compute sleds.

Example 74 includes the subject matter of any of Examples 69-73, and wherein the means for predicting the next job to be requested for acceleration comprises means for predicting a next job to be requested for acceleration based on an execution pattern of bit-streams for each available application that is presently being executed on the plurality of the compute sleds.

Example 75 includes the subject matter of any of Examples 69-74, and wherein the means for predicting the next job to be requested for acceleration based on an execution pattern of bit-streams for each available application comprises means for determining a past execution history of each bit-stream for each available application.

Example 76 includes the subject matter of any of Examples 69-75, and wherein the means for predicting the next job to be requested for acceleration based on an execution pattern of bit-streams for each available application comprises means for predicting an execution pattern with machine learning.

Example 77 includes the subject matter of any of Examples 69-76, and wherein the means for predicting the bit-stream from the bit-stream library comprises means for predicting a bit-stream based on available accelerators of the system.

Example 78 includes the subject matter of any of Examples 69-77, and wherein the means for predicting the bit-stream from the bit-stream library comprises means for predicting a bit-stream based on a type of predicted next job and types of workloads that each accelerator is capable of accelerating.

Example 79 includes the subject matter of any of Examples 69-78, and wherein the means for predicting the bit-stream from the bit-stream library comprises means for predicting an execution pattern of bit-streams for each available application.

Example 80 includes the subject matter of any of Examples 69-79, and wherein the means for selecting the accelerator that satisfies characteristics of the predicted bit-stream comprises means for determining an accelerator based on a particular accelerator capability required by the predicted bit-stream.

Example 81 includes the subject matter of any of Examples 69-80, and wherein the means for selecting the accelerator that satisfies characteristics of the predicted bit-stream comprises means for determining an accelerator based on a capacity on an accelerator required by the predicted bit-stream.

Example 82 includes the subject matter of any of Examples 69-81, and further including means for determining features of each accelerator of the plurality of accelerators of the system.

Example 83 includes the subject matter of any of Examples 69-82, and wherein the means for determining features of each accelerator of the system comprises means for determining the availability of each accelerator.

Example 84 includes the subject matter of any of Examples 69-83, and wherein the means for determining the availability of each accelerator comprises means for determining a present load on each accelerator.

Example 85 includes the subject matter of any of Examples 69-84, and wherein the means for determining availability of each accelerator comprises means for determining a number of free slots in each accelerator.

Example 86 includes the subject matter of any of Examples 69-85, and wherein the means for determining availability of each accelerator comprises means for determining a number of free logic gates in each accelerator.

Example 87 includes the subject matter of any of Examples 69-86, and wherein the means for determining features of each accelerator of the system comprises means for determining types of workloads that each accelerator is capable of accelerating.

Example 88 includes the subject matter of any of Examples 69-87, and wherein the means for determining types of workloads that each accelerator is capable of accelerating comprises means for determining cryptography, compression, transcoding, matrix multiplication, and/or convolution neural network operations capabilities of each accelerator.

Example 89 includes the subject matter of any of Examples 69-88, and wherein the means for determining features of each accelerator of the system comprises means for determining a physical distance from the requesting compute sled to each accelerator.

Example 90 includes the subject matter of any of Examples 69-89, and wherein the means for selecting the accelerator that satisfies characteristics of the predicted bit-stream comprises means for determining an accelerator based on the features of each accelerator.

## Claims

1. A method comprising:
storing at least one bit-stream in a Field Programmable Gate Array (FPGA) bit-stream library for different FPGAs in different network nodes;
assigning a bit-stream in the FPGA bit-stream library to one of a plurality of FPGAs, an FPGA capable of including a plurality of kernels;
tracking bit-streams on the FPGAs; and
dynamically allocating at least one FPGA to assist in execution of an application.

2. The method of Claim 1, further comprising:
offloading tasks to the FPGAs.

3. The method of Claim 1 or 2, further comprising:
supporting a cloud operating environment.

4. The method of any preceding Claim, wherein one of the FPGAs to fetch the bit-stream from the FPGA bit-stream library.

5. The method of any preceding Claim, further comprising:
using one or more security operations for at least one bit-stream.

6. The method of any preceding Claim, further comprising:
storing a timestamp for bit-streams in the FPGA bit-stream library.

7. The method of any preceding Claim, further comprising:
determining an available FPGA that is capable of executing a predicted next job; and
configuring the determined FPGA.

8. One or more non-transitory machine-readable storage media comprising a plurality of instructions stored thereon that, when executed by a compute device cause the compute device to perform the method of any preceding Claim.

9. A system comprising:
at least one Field Programmable Gate Array (FPGA) to receive an assignment of a bit-stream from a remote orchestration server, the remote orchestration server to store at least one bit-stream in an FPGA bit-stream library for different FPGAs in different network nodes, the remote orchestrator server to assign the bit-stream in the FPGA bit-stream library to one of a plurality of FPGAs, an FPGA capable of including a plurality of kernels, the remote orchestration server to track bit-streams on the FPGAs and to dynamically allocate at least one FPGA to assist in execution of an application.

10. The system of Claim 9, wherein the remote orchestration server to offload tasks to the FPGAs.

11. The system of Claim 9 or 10, wherein the remote orchestration server to support a cloud operating environment.

12. The system of any of Claims 9 to 11, wherein the remote orchestration server to use one or more security operations for at least one bit-stream.

13. The system of any of Claims 9 to 12, wherein the remote orchestration server to store a timestamp for bit-streams in the FPGA bit-stream library.

14. The system of any of Claims 9 to 13, wherein the remote orchestration server to determine an available FPGA that is capable of executing a predicted next job and configure the determined FPGA.
